# EUROPEAN PATENT APPLICATION

(11) **EP 4 106 470 A1**
(43) Date of publication of application: **21.12.2022**
(21) Application number: 21764211.5
(22) Date of filing: 01.03.2021
(51) Int. Cl.: H04W 74/00

(54) **COMMUNICATION METHOD AND APPARATUS**

(30) Priority: 06.03.2020 CN 202010150540
(71) Applicant: Huawei Technologies Co., Ltd., Shenzhen, Guangdong 518129, (CN)
(72) Inventor: CHEN, Lei, Shenzhen, Guangdong 518129 (CN); LI, Bingzhao, Shenzhen, Guangdong 518129 (CN); WANG, Hong, Shenzhen, Guangdong 518129 (CN); XIE, Zonghui, Shenzhen, Guangdong 518129 (CN)
(74) Representative: Epping - Hermann - Fischer
(86) International application number: PCT/CN2021/078440
(87) International publication number: WO 2021/175185

(57) **Abstract**

This application relates to a communication method and apparatus. A second network device receives a first message from a first network device, where the first message includes random access related information. The second network device sends a second message to a terminal device, where the second message indicates to use a first random access type in a random access procedure, and the first random access type is a 2-step RACH or a 4-step RACH. The random access related information includes one or more of the following: random access indication information, indicating the first random access type; random access capability information, including information about a random access type supported by the terminal device; random access mode information, indicating to use a CBRA mode or a CFRA mode in the random access procedure; an early downlink-data transmission indication, indicating to transmit a downlink data packet in the random access procedure; and a size of the downlink data packet. The terminal device may perform early downlink-data transmission through the 2-step RACH, to reduce a network access latency.

## Description

### CROSS-REFERENCE TO RELATED APPLICATIONS

This application claims priority to Chinese Patent Application No. 202010150540.3, filed with the China National Intellectual Property Administration on March 6, 2020 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A terminal device may implement uplink synchronization with a network device through a random access (random access, RA) procedure. The random access procedure includes a contention-based random access procedure and a contention-free random access procedure. Currently, the contention-based random access procedure includes four steps, and therefore is also referred to as a 4-step random access procedure or a 4-step (step) random access channel (random access channel, RACH). The 4-step RACH requires a large quantity of interaction procedures and has a long latency. Consequently, the 4-step RACH cannot be well applied to scenarios with high latency requirements. Therefore, a contention-based 2-step RACH, also referred to as a 2-step RACH, is introduced. The 2-step RACH requires only two steps to complete random access. It is clear that a network access latency may be reduced due to a small quantity of interaction steps. This is conducive to meeting the scenarios with high latency requirements. Certainly, the 2-step RACH may also be applied to contention-free access scenarios. This is not particularly limited herein.

In addition, if a terminal device in a radio resource control (radio resource control, RRC) inactive (inactive) state is to perform uplink transmission or downlink transmission, the terminal device needs to first initiate an RRC resume (resume) process to enter an RRC connected state, and performs transmission after entering the RRC connected state. However, when the terminal device needs to transmit a small data packet, signaling overheads consumed for entering the RRC connected state may be greater than an amount of data that needs to be transmitted, resulting in extremely low efficiency. Therefore, currently, many studies begin to focus on early data transmission. The early data transmission means that a terminal device can perform data transmission without entering an RRC connected state, to effectively improve data transmission efficiency, and reduce power consumption of the terminal device.

Currently, the terminal device needs to perform early data transmission through a random access procedure, and can perform early data transmission only through the 4-step RACH. However, the 4-step RACH has a long latency, and cannot be well applied to early transmission of data with a high latency requirement.

### SUMMARY

Embodiments of this application provide a communication method and apparatus, to reduce a latency of early data transmission.

According to a first aspect, a first communication method is provided. The method includes: receiving a first message from a first network device, where the first message includes random access related information; and sending a second message to a terminal device, where the second message indicates to use a first random access type in a random access procedure, and the first random access type is a 2-step RACH or a 4-step RACH. The random access related information includes one or more of the following: random access indication information, indicating the first random access type; random access capability information, including information about a random access type supported by the terminal device; random access mode information, indicating to use a CBRA mode or a CFRA mode in the random access procedure; an early downlink-data transmission indication, indicating to transmit a downlink data packet in the random access procedure; and a size of the downlink data packet.

The method may be performed by a first communication apparatus. The first communication apparatus may be a communication device, or may be a communication apparatus, for example, a chip, that can support the communication device to implement a function required in the method. For example, the first communication apparatus is a network device, a chip disposed in the network device and configured to implement a function of the network device, or another component configured to implement the function of the network device. The following description process uses an example in which the first communication apparatus is a second network device.

In this embodiment of this application, for example, the second network device may indicate, by using the second message, the terminal device to use the 2-step RACH or the 4-step RACH in the random access procedure. For example, the random access procedure is used for early downlink-data transmission, so that the terminal device can perform early downlink-data transmission through the 2-step RACH. The 2-step RACH requires a small quantity of steps, so that a network access latency can be reduced. This is conducive to meeting early transmission of data with a high latency requirement. In addition, the second network device may further determine, based on different cases, to use the 2-step RACH or the 4-step RACH, so that an early downlink-data transmission process is more flexible. Certainly, the random access procedure may alternatively not be applied to the early downlink-data transmission, but may be used, for example, by the terminal device to enter an RRC connected state. In this case, the second network device may indicate the first random access type to the terminal device, and the terminal device does not need to perform selection, to reduce load of the terminal device.

In an optional implementation, the random access related information includes the random access capability information, and does not include the random access indication information; and the method further includes:
determining the first random access type based on the random access capability information.

If the terminal device supports the 2-step RACH, the first random access type is the 2-step RACH or the 4-step RACH. Alternatively, if the terminal device does not support the 2-step RACH, the first random access type is the 4-step RACH.

If the random access related information includes the random access indication information, the second network device may determine the first random access type based on the random access indication information without further determining the first random access type. If the random access related information does not include the random access indication information, the second network device further needs to determine the first random access type. For example, although the random access related information does not include the random access indication information, the random access related information may include the random access capability information. In this case, the second network device may determine the first random access type based on the random access capability information. For example, if the random access capability information indicates that the terminal device supports the 2-step RACH, the second network device may determine that the first random access type is the 2-step RACH or the 4-step RACH. Alternatively, if the random access capability information indicates that the terminal device supports the 4-step RACH, the second network device may determine that the first random access type is the 4-step RACH.

In an optional implementation, the second message further includes the early downlink-data transmission indication and/or the random access mode information.

For example, the second message may include the early downlink-data transmission indication, to indicate the terminal device to perform early downlink-data transmission, so that the terminal device can learn that the early downlink-data transmission needs to be performed in the random access procedure. In addition, the second message may include the random access mode information, and the terminal device may determine, based on the random access mode information, to use the CBRA mode or the CFRA mode in the random access procedure. The second message includes such information, to give a more definite indication to the terminal device.

In an optional implementation, the second message further indicates whether to use a random access prioritization parameter in the random access procedure, and the random access prioritization parameter is used to accelerate the random access procedure.

For example, if the early downlink-data transmission needs to be performed, the random access prioritization parameter may be used in the early downlink-data transmission process. The random access prioritization parameter may be used to accelerate the random access procedure. Therefore, a transmission latency of the downlink data packet can be reduced by using the random access prioritization parameter, to accelerate the early downlink-data transmission process. That the random access prioritization parameter is used to accelerate the random access procedure may be understood as: After using the random access prioritization parameter, the terminal device can quickly complete random access. For example, if the random access prioritization parameter includes a ramping step, the random access prioritization parameter can reduce a quantity of times that the terminal device initiates random access, and improve a random access success rate of the terminal device, to accelerate the random access procedure. For another example, if the random access prioritization parameter includes a scaling factor, the random access prioritization parameter may enable the terminal device to initiate random access as soon as possible, to accelerate the random access procedure. In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In this embodiment of this application, the ramping step included in the random access prioritization parameter may be greater than a common ramping step. If the terminal device determines to use the random access prioritization parameter, and the random access prioritization parameter includes the ramping step, when the terminal device needs to perform power ramping, the terminal device uses the ramping step included in the random access prioritization parameter. In this case, when the terminal device performs power ramping, transmit power is increased by a large amount, to improve the random access success rate of the terminal device. In addition, the backoff duration determined based on the scaling factor provided in this embodiment of this application may be less than backoff duration directly indicated by the second network device. If the terminal device determines to use the random access prioritization parameter, and the random access prioritization parameter includes the scaling factor, when the terminal device needs to back off, the terminal device uses the backoff duration determined based on the scaling factor. In this case, when the terminal device backs off, the backoff duration is short, to reduce a random access latency of the terminal device. In an optional implementation, the method further includes:
sending the random access prioritization parameter to the terminal device.

For example, the second network device may send the random access prioritization parameter by using a system message, and a plurality of terminal devices may receive the random access prioritization parameter. If the second network device indicates to use the random access prioritization parameter, because the terminal device has obtained the random access prioritization parameter, the terminal device may use the random access prioritization parameter when performing random access.

In an optional implementation, the first message is a radio access network paging message, and/or the second message is a paging message.

Only examples of the first message and the second message are provided herein. A type of the first message or the second message is not limited in this embodiment of this application.

According to a second aspect, a second communication method is provided. The method includes: determining random access related information; and sending a first message to a second network device, where the first message includes the random access related information. The random access related information includes one or more of the following: random access indication information, indicating an access type in a random access procedure; random access capability information, including information about a random access type supported by a terminal device; random access mode information, indicating to use a CBRA mode or a CFRA mode in the random access procedure; an early downlink-data transmission indication, indicating to transmit a downlink data packet in the random access procedure; and a size of the downlink data packet.

The method may be performed by a second communication apparatus. The second communication apparatus may be a communication device, or may be a communication apparatus, for example, a chip, that can support the communication device to implement a function required in the method. For example, the second communication apparatus is a network device, a chip disposed in the network device and configured to implement a function of the network device, or another component configured to implement the function of the network device. The following description process uses an example in which the second communication apparatus is a first network device.

In an optional implementation, the method further includes:
determining that the size of the downlink data packet is less than a first threshold; and
determining to transmit the downlink data packet in the random access procedure.

In this embodiment of this application, whether to perform early downlink-data transmission may be determined by the first network device, or may be determined by the second network device. If the first network device determines whether to perform early downlink-data transmission, the first network device may determine, based on the size of the downlink data packet, whether to perform early downlink-data transmission. If the size of the downlink data packet is less than the first threshold, it indicates that the downlink data packet has a small information amount, and can be transmitted through the early downlink-data transmission, and the terminal device does not need to enter an RRC connected state, so that necessary steps are reduced, and a data transmission latency is also reduced.

In an optional implementation, the first message is a radio access network paging message.

For technical effects brought by the second aspect or the optional implementations, refer to the descriptions of the technical effects brought by the first aspect or the corresponding implementations.

According to a third aspect, a third communication method is provided. The method includes: receiving a second message from a second network device, where the second message indicates to use a first random access type in a random access procedure, and the first random access type is a 2-step RACH or a 4-step RACH; and initiating random access by using the first random access type, where the second message is a paging message.

The method may be performed by a third communication apparatus. The third communication apparatus may be a communication device, or may be a communication apparatus, for example, a chip, that can support the communication device to implement a function required in the method. For example, the third communication apparatus is a terminal device, a chip disposed in the terminal device and configured to implement a function of the terminal device, or another component configured to implement the function of the terminal device. The following description process uses an example in which the third communication apparatus is the terminal device.

In an optional implementation, the second message further includes an early downlink-data transmission indication and/or random access mode information, where the early downlink-data transmission indication indicates to transmit a downlink data packet in the random access procedure, and the random access mode information indicates to use a CBRA mode or a CFRA mode in the random access procedure.

In an optional implementation, the method further includes:
performing early downlink-data transmission in the random access procedure.

In an optional implementation, the second message further indicates whether to use a random access prioritization parameter in the random access procedure, and the random access prioritization parameter is used to accelerate the random access procedure.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the method further includes:
receiving the random access prioritization parameter.

For technical effects brought by the third aspect or the optional implementations, refer to the descriptions of the technical effects brought by the first aspect or the corresponding implementations.

According to a fourth aspect, a fourth communication method is provided. The method includes: determining to send downlink data through early downlink-data transmission; and sending a second message, where the second message indicates whether to use a random access prioritization parameter during the early downlink-data transmission, and the random access prioritization parameter is used to accelerate a random access procedure.

The method may be performed by a fourth communication apparatus. The fourth communication apparatus may be a communication device, or may be a communication apparatus, for example, a chip, that can support the communication device to implement a function required in the method. For example, the fourth communication apparatus is a network device, a chip disposed in the network device and configured to implement a function of the network device, or another component configured to implement the function of the network device. The following description process uses an example in which the fourth communication apparatus is a second network device.

In this embodiment of this application, the random access prioritization parameter may be used in an early downlink-data transmission process. For example, if a downlink data packet that needs to be early transmitted has a high latency requirement, or the downlink data packet corresponds to an urgent service, transmission of the downlink data packet can be accelerated by using the technical solution in this embodiment of this application, to reduce a transmission latency, and meet a service requirement as much as possible.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In this embodiment of this application, the ramping step included in the random access prioritization parameter may be greater than a common ramping step. If a terminal device determines to use the random access prioritization parameter, and the random access prioritization parameter includes the ramping step, when the terminal device needs to perform power ramping, the terminal device uses the ramping step included in the random access prioritization parameter. In this case, when the terminal device performs power ramping, transmit power is increased by a large amount, to improve a random access success rate of the terminal device. In addition, the backoff duration determined based on the scaling factor provided in this embodiment of this application may be less than backoff duration directly indicated by the second network device. If the terminal device determines to use the random access prioritization parameter, and the random access prioritization parameter includes the scaling factor, when the terminal device needs to back off, the terminal device uses the backoff duration determined based on the scaling factor. In this case, when the terminal device backs off, the backoff duration is short, to reduce a random access latency of the terminal device. In an optional implementation, the method further includes:
sending the random access prioritization parameter.

For example, the second network device may send the random access prioritization parameter by using a system message, and a plurality of terminal devices may receive the random access prioritization parameter. If the second network device indicates to use the random access prioritization parameter, because the terminal device has obtained the random access prioritization parameter, the terminal device may use the random access prioritization parameter when performing random access.

According to a fifth aspect, a fifth communication method is provided. The method includes: receiving a second message, where the second message indicates whether to use a random access prioritization parameter during early downlink-data transmission, and the random access prioritization parameter is used to accelerate a random access procedure; and performing the random access procedure to perform early downlink-data transmission, where the random access prioritization parameter is used in the random access procedure.

The method may be performed by a second communication apparatus. The fifth communication apparatus may be a communication device, or may be a communication apparatus, for example, a chip, that can support the communication device to implement a function required in the method. For example, the fifth communication apparatus is a terminal device, a chip disposed in the terminal device and configured to implement a function of the terminal device, or another component configured to implement the function of the terminal device. The following description process uses an example in which the fifth communication apparatus is the terminal device.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the method further includes:
receiving the random access prioritization parameter.

In an optional implementation, the method further includes:
receiving a reference signal;
measuring the reference signal to obtain a measurement result; and
if a value corresponding to the measurement result is greater than a second threshold, selecting a 2-step RACH; otherwise, selecting a 4-step RACH.

If the second message does not indicate a first random access type, the terminal device may have a different processing manner. For example, the terminal device may directly select the 4-step RACH without much determining, to reduce a determining process of the terminal device, and reduce a random access latency as much as possible. Alternatively, if the terminal device can support the 2-step RACH, the terminal device may perform selection, to determine to use the 4-step RACH or the 2-step RACH. For example, the terminal device may receive the reference signal from a second network device, where the reference signal is, for example, an SSB or a CSI-RS. The terminal device may measure the reference signal to obtain the measurement result. For example, the measurement result is RSRP, RSRQ, or an SINR. If the value corresponding to the measurement result is greater than the second threshold, the terminal device may select the 2-step RACH. If the value corresponding to the measurement result is less than or equal to the second threshold, the terminal device may select the 4-step RACH. The terminal device may autonomously select a random access type, so that the performed random access procedure can better conform to a current channel condition. For technical effects brought by the fifth aspect or the optional implementations, refer to the descriptions of the technical effects brought by the fourth aspect or the corresponding implementations.

According to a sixth aspect, a communication apparatus is provided. The communication apparatus is, for example, the first communication apparatus described above. The first communication apparatus is configured to perform the method according to any one of the first aspect or the possible implementations. Specifically, the first communication apparatus may include modules configured to perform the method according to any one of the first aspect or the possible implementations, for example, include a processing module and a transceiver module. For example, the transceiver module may include a sending module and a receiving module. The sending module and the receiving module may be different functional modules, or may be a same functional module but can implement different functions. For example, the first communication apparatus is a communication device, or is a chip or another component disposed in the communication device. For example, the communication device is a network device. The following uses an example in which the first communication apparatus is a second network device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different functional modules, or may be a same functional module but can implement different functions. If the first communication apparatus is the communication device, the transceiver is implemented, for example, by an antenna, a feeder, and a codec in the communication device. Alternatively, if the first communication apparatus is the chip disposed in the communication device, the transceiver (or the transmitter and the receiver) is, for example, a communication interface in the chip. The communication interface is connected to a radio frequency transceiver component in the communication device, to send and receive information through the radio frequency transceiver component. In a description process of the sixth aspect, descriptions are provided by still using an example in which the first communication apparatus is the second network device and includes the processing module, the sending module, and the receiving module.

The receiving module is configured to receive a first message from a first network device, where the first message includes random access related information.

The sending module is configured to send a second message to a terminal device, where the second message indicates to use a first random access type in a random access procedure, and the first random access type is a 2-step RACH or a 4-step RACH.

The random access related information includes one or more of the following:
random access indication information, indicating the first random access type;
random access capability information, including information about a random access type supported by the terminal device;
random access mode information, indicating to use a CBRA mode or a CFRA mode in the random access procedure;
an early downlink-data transmission indication, indicating to transmit a downlink data packet in the random access procedure; and
a size of the downlink data packet.

In an optional implementation, the random access related information includes the random access capability information, and does not include the random access indication information. The processing module is configured to determine the first random access type based on the random access capability information.

If the terminal device supports the 2-step RACH, the first random access type is the 2-step RACH or the 4-step RACH. Alternatively, if the terminal device does not support the 2-step RACH, the first random access type is the 4-step RACH.

In an optional implementation, the second message further includes the early downlink-data transmission indication and/or the random access mode information.

In an optional implementation, the second message further indicates whether to use a random access prioritization parameter in the random access procedure, and the random access prioritization parameter is used to accelerate the random access procedure.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the sending module is further configured to send the random access prioritization parameter to the terminal device.

In an optional implementation,
the first message is a radio access network paging message; and/or
the second message is a paging message.

For technical effects brought by the sixth aspect or the optional implementations, refer to the descriptions of the technical effects brought by the first aspect or the corresponding implementations.

According to a seventh aspect, a communication apparatus is provided. The communication apparatus is, for example, the second communication apparatus described above. The second communication apparatus is configured to perform the method according to any one of the second aspect or the possible implementations. Specifically, the second communication apparatus may include modules configured to perform the method according to any one of the second aspect or the possible implementations, for example, include a processing module and a transceiver module. For example, the transceiver module may include a sending module and a receiving module. The sending module and the receiving module may be different functional modules, or may be a same functional module but can implement different functions. For example, the second communication apparatus is a communication device, or is a chip or another component disposed in the communication device. For example, the communication device is a network device. The following uses an example in which the second communication apparatus is a first network device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different functional modules, or may be a same functional module but can implement different functions. If the second communication apparatus is the communication device, the transceiver is implemented, for example, by an antenna, a feeder, and a codec in the communication device. Alternatively, if the second communication apparatus is the chip disposed in the communication device, the transceiver (or the transmitter and the receiver) is, for example, a communication interface in the chip. The communication interface is connected to a radio frequency transceiver component in the communication device, to send and receive information through the radio frequency transceiver component. In a description process of the seventh aspect, descriptions are provided by still using an example in which the second communication apparatus is the first network device and includes the processing module, the sending module, and the receiving module.

The processing module is configured to determine random access related information.

The sending module is configured to send a first message to a second network device, where the first message includes the random access related information.

The random access related information includes one or more of the following:
random access indication information, indicating an access type in a random access procedure;
random access capability information, including information about a random access type supported by a terminal device;
random access mode information, indicating to use a CBRA mode or a CFRA mode in the random access procedure;
an early downlink-data transmission indication, indicating to transmit a downlink data packet in the random access procedure; and
a size of the downlink data packet.

In an optional implementation, the processing module is further configured to:
determine that the size of the downlink data packet is less than a first threshold; and
determine to transmit the downlink data packet in the random access procedure.

In an optional implementation, the first message is a radio access network paging message.

For technical effects brought by the seventh aspect or the optional implementations, refer to the descriptions of the technical effects brought by the second aspect or the corresponding implementations.

According to an eighth aspect, a communication apparatus is provided. The communication apparatus is, for example, the third communication apparatus described above. The third communication apparatus is configured to perform the method according to any one of the third aspect or the possible implementations. Specifically, the third communication apparatus may include modules configured to perform the method according to any one of the third aspect or the possible implementations, for example, include a processing module and a transceiver module. For example, the transceiver module may include a sending module and a receiving module. The sending module and the receiving module may be different functional modules, or may be a same functional module but can implement different functions. For example, the third communication apparatus is a communication device, or is a chip or another component disposed in the communication device. For example, the communication device is a terminal device. The following uses an example in which the third communication apparatus is the terminal device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different functional modules, or may be a same functional module but can implement different functions. If the third communication apparatus is the communication device, the transceiver is implemented, for example, by an antenna, a feeder, and a codec in the communication device. Alternatively, if the third communication apparatus is the chip disposed in the communication device, the transceiver (or the transmitter and the receiver) is, for example, a communication interface in the chip. The communication interface is connected to a radio frequency transceiver component in the communication device, to send and receive information through the radio frequency transceiver component. In a description process of the eighth aspect, descriptions are provided by still using an example in which the third communication apparatus is the terminal device and includes the processing module, the sending module, and the receiving module.

The receiving module is configured to receive a second message from a second network device, where the second message indicates to use a first random access type in a random access procedure, and the first random access type is a 2-step RACH or a 4-step RACH.

The processing module is configured to initiate random access by using the first random access type, where the second message is a paging message.

In an optional implementation, the second message further includes an early downlink-data transmission indication and/or random access mode information, where the early downlink-data transmission indication indicates to transmit a downlink data packet in the random access procedure, and the random access mode information indicates to use a CBRA mode or a CFRA mode in the random access procedure.

In an optional implementation, the processing module is further configured to perform early downlink-data transmission in the random access procedure.

In an optional implementation, the second message further indicates whether to use a random access prioritization parameter in the random access procedure, and the random access prioritization parameter is used to accelerate the random access procedure.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the receiving module is further configured to receive the random access prioritization parameter.

For technical effects brought by the eighth aspect or the optional implementations, refer to the descriptions of the technical effects brought by the third aspect or the corresponding implementations.

According to a ninth aspect, a communication apparatus is provided. The communication apparatus is, for example, the fourth communication apparatus described above. The fourth communication apparatus is configured to perform the method according to any one of the fourth aspect or the possible implementations. Specifically, the fourth communication apparatus may include modules configured to perform the method according to any one of the fourth aspect or the possible implementations, for example, include a processing module and a transceiver module. For example, the transceiver module may include a sending module and a receiving module. The sending module and the receiving module may be different functional modules, or may be a same functional module but can implement different functions. For example, the fourth communication apparatus is a communication device, or is a chip or another component disposed in the communication device. For example, the communication device is a network device. The following uses an example in which the fourth communication apparatus is a second network device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different functional modules, or may be a same functional module but can implement different functions. If the fourth communication apparatus is the communication device, the transceiver is implemented, for example, by an antenna, a feeder, and a codec in the communication device. Alternatively, if the fourth communication apparatus is the chip disposed in the communication device, the transceiver (or the transmitter and the receiver) is, for example, a communication interface in the chip. The communication interface is connected to a radio frequency transceiver component in the communication device, to send and receive information through the radio frequency transceiver component. In a description process of the ninth aspect, descriptions are provided by still using an example in which the fourth communication apparatus is the second network device and includes the processing module, the sending module, and the receiving module.

The processing module is configured to determine to send downlink data through early downlink-data transmission. The sending module is configured to send a second message, where the second message indicates whether to use a random access prioritization parameter during the early downlink-data transmission, and the random access prioritization parameter is used to accelerate a random access procedure.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the sending module is further configured to send the random access prioritization parameter.

For technical effects brought by the ninth aspect or the optional implementations, refer to the descriptions of the technical effects brought by the fourth aspect or the corresponding implementations.

According to a tenth aspect, a communication apparatus is provided. The communication apparatus is, for example, the fifth communication apparatus described above. The fifth communication apparatus is configured to perform the method according to any one of the fifth aspect or the possible implementations. Specifically, the fifth communication apparatus may include modules configured to perform the method according to any one of the fifth aspect or the possible implementations, for example, include a processing module and a transceiver module. For example, the transceiver module may include a sending module and a receiving module. The sending module and the receiving module may be different functional modules, or may be a same functional module but can implement different functions. For example, the fifth communication apparatus is a communication device, or is a chip or another component disposed in the communication device. For example, the communication device is a terminal device. The following uses an example in which the fifth communication apparatus is the terminal device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different functional modules, or may be a same functional module but can implement different functions. If the fifth communication apparatus is the communication device, the transceiver is implemented, for example, by an antenna, a feeder, and a codec in the communication device. Alternatively, if the fifth communication apparatus is the chip disposed in the communication device, the transceiver (or the transmitter and the receiver) is, for example, a communication interface in the chip. The communication interface is connected to a radio frequency transceiver component in the communication device, to send and receive information through the radio frequency transceiver component. In a description process of the tenth aspect, descriptions are provided by still using an example in which the fifth communication apparatus is the terminal device and includes the processing module, the receiving module, and the sending module.

The receiving module is configured to receive a second message, where the second message indicates whether to use a random access prioritization parameter during early downlink-data transmission, and the random access prioritization parameter is used to accelerate a random access procedure.

The processing module is configured to perform the random access procedure to perform early downlink-data transmission, where the random access prioritization parameter is used in the random access procedure.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the receiving module is further configured to receive the random access prioritization parameter.

In an optional implementation,
the receiving module is further configured to receive a reference signal;
the processing module is further configured to measure the reference signal to obtain a measurement result; and
the processing module is further configured to: when a value corresponding to the measurement result is greater than a second threshold, select a 2-step RACH; otherwise, select a 4-step RACH.

For technical effects brought by the tenth aspect or the optional implementations, refer to the descriptions of the technical effects brought by the fifth aspect or the corresponding implementations.

According to an eleventh aspect, a communication apparatus is provided. The communication apparatus is, for example, the first communication apparatus described above. The communication apparatus includes a processor. Optionally, the communication apparatus may further include a memory, configured to store computer instructions. The processor and the memory are coupled to each other, to implement the method according to the first aspect or the possible implementations. Alternatively, the first communication apparatus may not include a memory, and the memory may be located outside the first communication apparatus. Optionally, the first communication apparatus may further include a communication interface, configured to communicate with another apparatus or device. The processor, the memory, and the communication interface are coupled to each other, to implement the method according to the first aspect or the possible implementations. For example, when the processor executes the computer instructions stored in the memory, the first communication apparatus is enabled to perform the method according to any one of the first aspect or the possible implementations. For example, the first communication apparatus is a communication device, or is a chip or another component disposed in the communication device. For example, the communication device is a second network device.

If the first communication apparatus is the communication device, the communication interface is implemented, for example, by a transceiver (or a transmitter and a receiver) in the communication device, and the transceiver is implemented, for example, by an antenna, a feeder, and a codec in the communication device. Alternatively, if the first communication apparatus is the chip disposed in the communication device, the communication interface is, for example, an input/output interface such as an input/output pin of the chip. The communication interface is connected to a radio frequency transceiver component in the communication device, to send and receive information through the radio frequency transceiver component.

According to a twelfth aspect, a communication apparatus is provided. The communication apparatus is, for example, the second communication apparatus described above. The communication apparatus includes a processor. Optionally, the communication apparatus may further include a memory, configured to store computer instructions. The processor and the memory are coupled to each other, to implement the method according to the second aspect or the possible implementations. Alternatively, the second communication apparatus may not include a memory, and the memory may be located outside the second communication apparatus. Optionally, the second communication apparatus may further include a communication interface, configured to communicate with another apparatus or device. The processor, the memory, and the communication interface are coupled to each other, to implement the method according to the second aspect or the possible implementations. For example, when the processor executes the computer instructions stored in the memory, the second communication apparatus is enabled to perform the method according to any one of the second aspect or the possible implementations. For example, the second communication apparatus is a communication device, or is a chip or another component disposed in the communication device. For example, the communication device is a first network device.

If the second communication apparatus is the communication device, the communication interface is implemented, for example, by a transceiver (or a transmitter and a receiver) in the communication device, and the transceiver is implemented, for example, by an antenna, a feeder, and a codec in the communication device. Alternatively, if the second communication apparatus is the chip disposed in the communication device, the communication interface is, for example, an input/output interface such as an input/output pin of the chip. The communication interface is connected to a radio frequency transceiver component in the communication device, to send and receive information through the radio frequency transceiver component.

According to a thirteenth aspect, a communication apparatus is provided. The communication apparatus is, for example, the third communication apparatus described above. The communication apparatus includes a processor. Optionally, the communication apparatus may further include a memory, configured to store computer instructions. The processor and the memory are coupled to each other, to implement the method according to the third aspect or the possible implementations. Alternatively, the third communication apparatus may not include a memory, and the memory may be located outside the third communication apparatus. Optionally, the third communication apparatus may further include a communication interface, configured to communicate with another apparatus or device. The processor, the memory, and the communication interface are coupled to each other, to implement the method according to the third aspect or the possible implementations. For example, when the processor executes the computer instructions stored in the memory, the third communication apparatus is enabled to perform the method according to any one of the third aspect or the possible implementations. For example, the third communication apparatus is a communication device, or is a chip or another component disposed in the communication device. For example, the communication device is a terminal device.

If the third communication apparatus is the communication device, the communication interface is implemented, for example, by a transceiver (or a transmitter and a receiver) in the communication device, and the transceiver is implemented, for example, by an antenna, a feeder, and a codec in the communication device. Alternatively, if the third communication apparatus is the chip disposed in the communication device, the communication interface is, for example, an input/output interface such as an input/output pin of the chip. The communication interface is connected to a radio frequency transceiver component in the communication device, to send and receive information through the radio frequency transceiver component.

According to a fourteenth aspect, a communication apparatus is provided. The communication apparatus is, for example, the fourth communication apparatus described above. The communication apparatus includes a processor. Optionally, the communication apparatus may further include a memory, configured to store computer instructions. The processor and the memory are coupled to each other, to implement the method according to the fourth aspect or the possible implementations. Alternatively, the fourth communication apparatus may not include a memory, and the memory may be located outside the fourth communication apparatus. Optionally, the fourth communication apparatus may further include a communication interface, configured to communicate with another apparatus or device. The processor, the memory, and the communication interface are coupled to each other, to implement the method according to the fourth aspect or the possible implementations. For example, when the processor executes the computer instructions stored in the memory, the fourth communication apparatus is enabled to perform the method according to any one of the fourth aspect or the possible implementations. For example, the fourth communication apparatus is a communication device, or is a chip or another component disposed in the communication device. For example, the communication device is a second network device.

If the fourth communication apparatus is the communication device, the communication interface is implemented, for example, by a transceiver (or a transmitter and a receiver) in the communication device, and the transceiver is implemented, for example, by an antenna, a feeder, and a codec in the communication device. Alternatively, if the fourth communication apparatus is the chip disposed in the communication device, the communication interface is, for example, an input/output interface such as an input/output pin of the chip. The communication interface is connected to a radio frequency transceiver component in the communication device, to send and receive information through the radio frequency transceiver component.

According to a fifteenth aspect, a communication apparatus is provided. The communication apparatus is, for example, the fifth communication apparatus described above. The communication apparatus includes a processor. Optionally, the communication apparatus may further include a memory, configured to store computer instructions. The processor and the memory are coupled to each other, to implement the method according to the fifth aspect or the possible implementations. Alternatively, the fifth communication apparatus may not include a memory, and the memory may be located outside the fifth communication apparatus. Optionally, the fifth communication apparatus may further include a communication interface, configured to communicate with another apparatus or device. The processor, the memory, and the communication interface are coupled to each other, to implement the method according to the fifth aspect or the possible implementations. For example, when the processor executes the computer instructions stored in the memory, the fifth communication apparatus is enabled to perform the method according to any one of the fifth aspect or the possible implementations. For example, the fifth communication apparatus is a communication device, or is a chip or another component disposed in the communication device. For example, the communication device is a terminal device.

If the fifth communication apparatus is the communication device, the communication interface is implemented, for example, by a transceiver (or a transmitter and a receiver) in the communication device, and the transceiver is implemented, for example, by an antenna, a feeder, and a codec in the communication device. Alternatively, if the fifth communication apparatus is the chip disposed in the communication device, the communication interface is, for example, an input/output interface such as an input/output pin of the chip. The communication interface is connected to a radio frequency transceiver component in the communication device, to send and receive information through the radio frequency transceiver component.

According to a sixteenth aspect, a chip is provided. The chip includes a processor and a communication interface. The processor is coupled to the communication interface, and is configured to implement the method according to any one of the first aspect or the optional implementations.

Optionally, the chip may further include a memory. For example, the processor may read and execute a software program stored in the memory, to implement the method according to any one of the first aspect or the optional implementations. Alternatively, the memory may not be included in the chip, but is located outside the chip. This is equivalent to that the processor may read and execute a software program stored in an external memory, to implement the method according to any one of the first aspect or the optional implementations.

According to a seventeenth aspect, a chip is provided. The chip includes a processor and a communication interface. The processor is coupled to the communication interface, and is configured to implement the method according to any one of the second aspect or the optional implementations.

Optionally, the chip may further include a memory. For example, the processor may read and execute a software program stored in the memory, to implement the method according to any one of the second aspect or the optional implementations. Alternatively, the memory may not be included in the chip, but is located outside the chip. This is equivalent to that the processor may read and execute a software program stored in an external memory, to implement the method according to any one of the second aspect or the optional implementations.

According to an eighteenth aspect, a chip is provided. The chip includes a processor and a communication interface. The processor is coupled to the communication interface, and is configured to implement the method according to any one of the third aspect or the optional implementations.

Optionally, the chip may further include a memory. For example, the processor may read and execute a software program stored in the memory, to implement the method according to any one of the third aspect or the optional implementations. Alternatively, the memory may not be included in the chip, but is located outside the chip. This is equivalent to that the processor may read and execute a software program stored in an external memory, to implement the method according to any one of the third aspect or the optional implementations.

According to a nineteenth aspect, a chip is provided. The chip includes a processor and a communication interface. The processor is coupled to the communication interface, and is configured to implement the method according to any one of the fourth aspect or the optional implementations.

Optionally, the chip may further include a memory. For example, the processor may read and execute a software program stored in the memory, to implement the method according to any one of the fourth aspect or the optional implementations. Alternatively, the memory may not be included in the chip, but is located outside the chip. This is equivalent to that the processor may read and execute a software program stored in an external memory, to implement the method according to any one of the fourth aspect or the optional implementations.

According to a twentieth aspect, a chip is provided. The chip includes a processor and a communication interface. The processor is coupled to the communication interface, and is configured to implement the method according to any one of the fifth aspect or the optional implementations.

Optionally, the chip may further include a memory. For example, the processor may read and execute a software program stored in the memory, to implement the method according to any one of the fifth aspect or the optional implementations. Alternatively, the memory may not be included in the chip, but is located outside the chip. This is equivalent to that the processor may read and execute a software program stored in an external memory, to implement the method according to any one of the fifth aspect or the optional implementations.

According to a twenty-first aspect, a first communication system is provided. The first communication system includes the communication apparatus according to the sixth aspect, the communication apparatus according to the eleventh aspect, or the communication apparatus according to the sixteenth aspect, includes the communication apparatus according to the seventh aspect, the communication apparatus according to the twelfth aspect, or the communication apparatus according to the seventeenth aspect, and includes the communication apparatus according to the eighth aspect, the communication apparatus according to the thirteenth aspect, or the communication apparatus according to the eighteenth aspect.

According to a twenty-second aspect, a second communication system is provided. The second communication system includes the communication apparatus according to the ninth aspect, the communication apparatus according to the fourteenth aspect, or the communication apparatus according to the nineteenth aspect, and includes the communication apparatus according to the tenth aspect, the communication apparatus according to the fifteenth aspect, or the communication apparatus according to the twentieth aspect

According to a twenty-third aspect, a computer-readable storage medium is provided. The computer-readable storage medium is configured to store a computer program. When the computer program is run on a computer, the computer is enabled to perform the method according to any one of the first aspect or the possible implementations.

According to a twenty-fourth aspect, a computer-readable storage medium is provided. The computer-readable storage medium is configured to store a computer program. When the computer program is run on a computer, the computer is enabled to perform the method according to any one of the second aspect or the possible implementations. According to a twenty-fifth aspect, a computer-readable storage medium is provided. The computer-readable storage medium is configured to store a computer program. When the computer program is run on a computer, the computer is enabled to perform the method according to any one of the third aspect or the possible implementations. According to a twenty-sixth aspect, a computer-readable storage medium is provided. The computer-readable storage medium is configured to store a computer program. When the computer program is run on a computer, the computer is enabled to perform the method according to any one of the fourth aspect or the possible implementations.

According to a twenty-seventh aspect, a computer-readable storage medium is provided. The computer-readable storage medium is configured to store a computer program. When the computer program is run on a computer, the computer is enabled to perform the method according to any one of the fifth aspect or the possible implementations. According to a twenty-eighth aspect, a computer program product including instructions is provided. The computer program product is configured to store a computer program. When the computer program is run on a computer, the computer is enabled to perform the method according to any one of the first aspect or the possible implementations. According to a twenty-ninth aspect, a computer program product including instructions is provided. The computer program product is configured to store a computer program. When the computer program is run on a computer, the computer is enabled to perform the method according to any one of the second aspect or the possible implementations. According to a thirtieth aspect, a computer program product including instructions is provided. The computer program product is configured to store a computer program. When the computer program is run on a computer, the computer is enabled to perform the method according to any one of the third aspect or the possible implementations.

According to a thirty-first aspect, a computer program product including instructions is provided. The computer program product is configured to store a computer program. When the computer program is run on a computer, the computer is enabled to perform the method according to any one of the fourth aspect or the possible implementations. According to a thirty-second aspect, a computer program product including instructions is provided. The computer program product is configured to store a computer program. When the computer program is run on a computer, the computer is enabled to perform the method according to any one of the fifth aspect or the possible implementations. In embodiments of this application, the second network device may indicate the terminal device to use the 2-step RACH or the 4-step RACH in the random access procedure. For example, the random access procedure is used for the early downlink-data transmission, so that the terminal device can perform early downlink-data transmission through the 2-step RACH. The 2-step RACH requires a small quantity of steps, so that the network access latency can be reduced. This is conducive to meeting the early transmission of the data with the high latency requirement.

### BRIEF DESCRIPTION OF DRAWINGS

FIG. 1 is a flowchart of a contention-based random access procedure corresponding to a 4-step RACH;
FIG. 2 is a flowchart of a contention-based random access procedure corresponding to a 2-step RACH;
FIG. 3 is a flowchart of an early downlink-data transmission process in an NR system;
FIG. 4 is a schematic diagram of an application scenario according to an embodiment of this application;
FIG. 5 is a schematic diagram of another application scenario according to an embodiment of this application;
FIG. 6 is a flowchart of a first communication method according to an embodiment of this application;
FIG. 7 is a flowchart of a second communication method according to an embodiment of this application;
FIG. 8 is a schematic block diagram of a first-type second network device according to an embodiment of this application;
FIG. 9 is a schematic block diagram of a first network device according to an embodiment of this application;
FIG. 10 is a schematic block diagram of a first-type terminal device according to an embodiment of this application;
FIG. 11 is a schematic block diagram of a second-type second network device according to an embodiment of this application;
FIG. 12 is a schematic block diagram of a second-type terminal device according to an embodiment of this application;
FIG. 13 is a schematic block diagram of a communication apparatus according to an embodiment of this application;
FIG. 14 is another schematic block diagram of a communication apparatus according to an embodiment of this application;
FIG. 15 is still another schematic block diagram of a communication apparatus according to an embodiment of this application; and
FIG. 16 is yet another schematic block diagram of a communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

In the following descriptions, some terms in embodiments of this application are described, to help a person skilled in the art have a better understanding.
(1) Terminal device: The terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine type communication (machine-to-machine/machine type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device may be a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes a barcode, radio frequency identification (radio frequency identification, RFID), a sensor, a global positioning system (global positioning system, GPS), a laser scanner, or another information sensing device.

By way of example and not limitation, in embodiments of this application, the terminal device may alternatively be a wearable device. The wearable device may also be referred to as a wearable intelligent device, an intelligent wearable device, or the like, and is a generic term for wearable devices that are developed by applying a wearable technology to intelligent designs of daily wear, such as glasses, gloves, watches, clothes, and shoes. The wearable device is a portable device that can be directly worn on the body or integrated into clothes or an accessory of a user. The wearable device is more than a hardware device. The wearable device implements powerful functions through software support, data exchange, and cloud interaction. In a broad sense, wearable intelligent devices include full-featured and large-sized devices that can implement all or some functions without depending on smartphones, for example, smart watches or smart glasses, and include devices that focus only on one type of application function and need to collaboratively work with other devices such as smartphones, for example, various smart bands, smart helmets, or smart jewelry for monitoring physical signs.

If the terminal devices described above are located in a vehicle (for example, placed in the vehicle or mounted in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it may be understood that any device that can perform data communication with a base station may be considered as a terminal device.

In embodiments of this application, an apparatus for implementing functions of a terminal device may be a terminal device, or may be an apparatus, for example, a chip system, that can support the terminal device to implementing the functions. The apparatus may be mounted in the terminal device. In embodiments of this application, the chip system may include a chip, or may include a chip and another discrete component. In the technical solutions provided in embodiments of this application, the technical solutions provided in embodiments of this application are described by using an example in which the apparatus for implementing the functions of the terminal is the terminal device.

(2) Network device: The network device includes, for example, an access network (access network, AN) device like a base station (for example, an access point), and may be a device that is in an access network and that communicates with a wireless terminal device over an air interface through one or more cells. Alternatively, for example, a network device in a vehicle-to-everything (vehicle-to-everything, V2X) technology is a road side unit (road side unit, RSU). The base station may be configured to mutually convert a received over-the-air frame and an IP packet, and serve as a router between the terminal device and a remaining part of the access network, where the remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in an LTE system or a long term evolution-advanced (long term evolution-advanced, LTE-A) system, may include a next generation NodeB (next generation NodeB, gNB) in a 5th generation mobile communication technology (5th generation, 5G) NR system (also referred to as an NR system for short), or may include a centralized unit (centralized unit, CU) and a distributed unit (distributed unit, DU) in a cloud radio access network (cloud radio access network, Cloud RAN) system. This is not limited in embodiments of this application.

The network device may further include a core network device. The core network device includes, for example, an access and mobility management function (access and mobility management function, AMF) or a user plane function (user plane function, UPF). Embodiments of this application mainly relate to the access network. Therefore, the network device below is an access network device unless otherwise specified.

In embodiments of this application, an apparatus for implementing functions of the network device may be a network device, or may be an apparatus, for example, a chip system, that can support the network device to implement the functions. The apparatus may be mounted in the network device. In the technical solutions provided in embodiments of this application, the technical solutions provided in embodiments of this application are described by using an example in which the apparatus for implementing the functions of the network device is the network device. (3) RRC state: A terminal device has three RRC states: an RRC connected state, an RRC idle state, and an RRC inactive state.

RRC connected (connected) state (which may also be briefly referred to as a connected state, where the "connected state" and the "RRC connected state" are a same concept in this specification, and are interchangeable): The terminal device has established an RRC connection to a network, so that data transmission can be performed.

RRC idle (idle) state (which may also be briefly referred to as an idle state, where the "idle state" and the "RRC idle state" are a same concept in this specification, and are interchangeable): The terminal device has not established the RRC connection to the network, and a base station does not store a context of the terminal device. If the terminal device needs to enter the RRC connected state from the RRC idle state, the terminal device needs to initiate an RRC connection establishment process.

RRC inactive state (which may also be briefly referred to as an inactive state, where a "deactivated state", a "deactivated state", the "inactive state", the "RRC inactive state", an "RRC deactivated state", and the like are a same concept in this specification, and are interchangeable): The terminal device previously enters the RRC connected state through an anchor base station. Then, the anchor base station releases the RRC connection, but stores the context of the terminal device. If the terminal device needs to re-enter the RRC connected state from the RRC inactive state, the terminal device needs to initiate an RRC connection resume process (or referred to as an RRC connection reestablishment process) through a base station on which the terminal device currently camps. Because the terminal device may be moving, the base station on which the terminal device currently camps and the anchor base station of the terminal device may be a same base station, or may be different base stations. Compared with the RRC establishment process, the RRC resume process has a shorter latency and fewer signaling overheads. However, the base station needs to store the context of the terminal device. This causes storage overheads of the base station.

(4) The terms "system" and "network" may be used interchangeably in embodiments of this application. "At least one" means one or more, and "a plurality of' means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Unless otherwise stated on the contrary, ordinal numbers such as "first" and "second" in embodiments of this application are used to distinguish between a plurality of objects, and are not intended to limit sizes, content, a sequence, a time sequence, priorities, importance degrees, or the like of the plurality of objects. For example, a first paging message and a second paging message are merely intended to distinguish between different paging messages, but do not indicate that the two paging messages are different in a size, content, a sending sequence, a priority, an importance degree, or the like.

The foregoing describes some noun concepts in embodiments of this application. The following describes technical features in embodiments of this application.

In discussion of the 5G standard, it is agreed to introduce an RRC inactive state for a terminal device. The inactive state is more energy-saving than an RRC connected state, and a latency for network access from the inactive state is shorter than that for network access from an RRC idle state.

For example, the terminal device is in the RRC connected state through a base station. If no data is transmitted between the base station and the terminal device temporarily, or there is another cause, the base station may control the terminal device to enter the RRC inactive state, and allocate, to the terminal device, a radio access network notification area (RAN notification area, RNA) and a context ID (context ID), for example, an inactive radio network temporary identifier (inactive radio network temporary identifier, I-RNTI). When the terminal device moves in the allocated RNA, in a manner, it is unnecessary to notify the base station of a location of the terminal device, and the base station is notified only after the terminal device moves out of the RNA. In another manner, even if the terminal device moves in the allocated RNA, the terminal device needs to periodically notify the base station of a location of the terminal device. This manner is also referred to as radio access network notification area update (RNA update, RNAU).

If the terminal device in the RRC inactive state is to perform uplink transmission or downlink transmission, the terminal device needs to first initiate an RRC resume process to enter the RRC connected state, and performs transmission after entering the RRC connected state. However, when the terminal device needs to transmit a small data packet, signaling overheads consumed for entering the RRC connected state may be greater than an amount of data that needs to be transmitted, resulting in extremely low efficiency. Therefore, currently, many studies begin to focus on early data transmission. The early data transmission means that a terminal device can perform data transmission without entering an RRC connected state, to effectively improve data transmission efficiency, and reduce power consumption of the terminal device. The early data transmission includes early uplink-data transmission and early downlink-data transmission. This specification mainly focuses on an early downlink-data transmission process. Currently, a terminal device and a network device may perform early downlink-data transmission through a random access procedure. The following briefly describes the random access procedure.

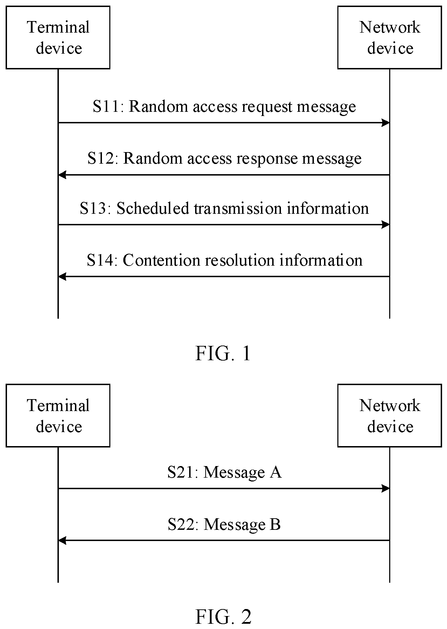

The random access procedure includes a contention-based random access (contention-based random access, CBRA) procedure and a contention-free random access (contention-free random access, CFRA) procedure. Currently, a contention-based random access procedure corresponding to a 4-step RACH includes four steps. Refer to FIG. 1. S11: A terminal device sends a random access request message to a network device, and the network device receives the random access request message from the terminal device. The random access request message may also be referred to as a message 1 (Msg1), and includes a random access preamble (preamble).

S12: The network device sends a random access response (random access response, RAR) message to the terminal device, and the terminal device receives the RAR message from the network device. The RAR message may also be referred to as a message 2 (Msg2).

S13: The terminal device sends scheduled transmission (scheduled transmission) information to the network device, and the network device receives the scheduled transmission information from the terminal device. A message carrying the scheduled transmission information is referred to as a message 3 (Msg3).

After receiving the RAR message, the terminal device performs message transmission based on scheduling by the RAR message.

S14: The network device sends contention resolution (contention resolution) information to the terminal device, where a message carrying the contention resolution information is referred to as a message 4 (Msg4). The terminal device may obtain the contention resolution information by receiving the Msg4 from the network device.

The RAR message may include a random access preamble identifier (random access preamble identifier, RAP ID). When the RAP ID matches (or is the same as) a preamble ID selected by the terminal device, the terminal device considers that the RAR message is successfully received. After determining that the RAR message is successfully received, the terminal device does not monitor a subsequent RAR message.

If a CFRA procedure corresponding to the 4-step RACH is performed, the network device indicates a dedicated RACH resource to the terminal device, so that the terminal device sends the Msg1. In this way, no other terminal device contends with the terminal device for the RACH resource, to greatly improve a RACH success rate. The network device and the terminal device do not need to perform S14. Because there is no contention, the network device does not need to send the contention resolution information to the terminal device, to reduce a latency.

The foregoing describes the 4-step RACH. The following describes a 2-step RACH. A contention-based random access procedure corresponding to the 2-step RACH includes two steps. Refer to FIG. 2.

S21: A terminal device sends a message A (MsgA) to a network device, and the network device receives the MsgA from the terminal device.

The terminal device selects a MsgA resource from common MsgA resources broadcast by the network device, and sends the MsgA on the MsgA resource. The MsgA resource includes a resource (a time-frequency code) for sending a preamble and a corresponding physical uplink shared channel (physical uplink shared channel, PUSCH) resource. The MsgA also includes two parts: the preamble and a PUSCH payload (payload).

It may be considered that the MsgA includes the preamble and content included in the Msg3 in the 4-step RACH. S22: The network device sends a message B (MsgB) to the terminal device, and the terminal device receives the MsgB from the network device.

The MsgB may include contention resolution information, and may include content included in the RAR message in the 4-step RACH.

If a CFRA procedure corresponding to the 2-step RACH is performed, the network device indicates a dedicated MsgA resource to the terminal device, so that the terminal device sends the MsgA. In this way, no other terminal device contends with the terminal device for the MsgA resource, to greatly improve a success rate of sending the MsgA. The network device may still send a MsgB to the terminal device. The MsgB may include the content included in the RAR message in the 4-step RACH, but may not include the contention resolution information.

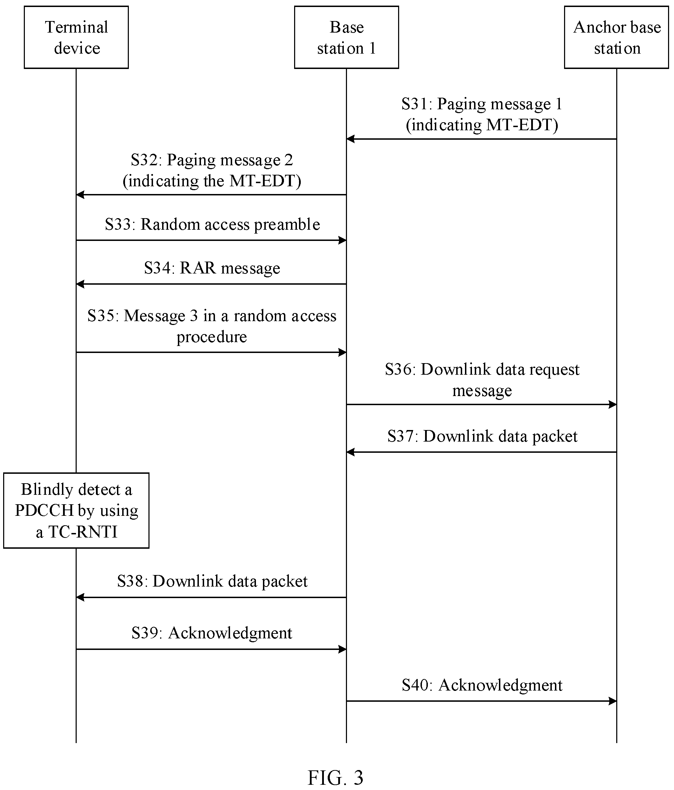

However, it should be noted that not all terminal devices have a random access capability for the 2-step RACH. The following describes an early downlink-data transmission process in an NR system. Refer to FIG. 3.

S31: An anchor base station sends a paging message (represented by a paging message 1 in FIG. 3) to all base stations in an RNA, and the base stations in the RNA receive the paging message 1 from the anchor base station.

The paging message 1 indicates that downlink data for a terminal device arrives, and indicates that the downlink data is mobile terminated early data transmission (mobile terminated-early data transmission, MT-EDT). In addition, the early data transmission is also referred to as early data transmission.

The anchor base station is an anchor base station of the terminal device. For example, the anchor base station stores a context of the terminal device. There are one or more terminal devices herein. For example, the paging message 1 may include an identity (ID) of the terminal device for which the downlink data arrives.

S32: Abase station 1 sends a paging message (represented by a paging message 2 in FIG. 3), and a terminal device receives the paging message from the base station 1.

After receiving the paging message 1 from the anchor base station, the base station 1 may determine to initiate random access for current MT-EDT, and may further determine a random access resource for initiating a 4-step RACH for the MT-EDT. The base station 1 in S32 is any base station that receives the paging message 1. The paging message 2 may include an ID of the terminal device for which the downlink data arrives. For example, the ID of the terminal device included in the paging message 2 may be the same as the ID of the terminal device included in the first paging message. The paging message 2 may indicate the MT-EDT for a specific terminal device. In addition, the paging message 2 is further used to configure the random access resource for the terminal device. The random access resource includes, for example, one or more of a preamble or another resource for the random access.

S33: The terminal device sends the preamble to the base station 1, and the base station 1 receives the preamble from the terminal device.

After receiving the paging message 2, the terminal device may determine whether the ID of the terminal device included in the paging message 2 includes an ID of the terminal device. If the ID in the paging message 2 includes the ID of the terminal device, and there is an MT-EDT indication for the terminal device, it indicates that there is MT-EDT data for the terminal device, in other words, there is downlink data to be early transmitted to the terminal device. In this case, the terminal device may initiate the random access to the base station 1 through the random access resource configured by using the paging message 2.

For example, the preamble is actual content sent by the terminal device on a physical random access channel (physical random access channel, PRACH), and includes a cyclic prefix (cyclic prefix, CP) and a sequence (sequence).

S34: The base station 1 sends a RAR message to the terminal device, and the terminal device receives the RAR message from the base station 1.

After receiving the preamble from the terminal device, the base station 1 may send the RAR message to the terminal device. The RAR message may include uplink timing advance (timing advance, TA), an uplink (uplink) grant (grant), and a temporary cell (temporary cell, TC)-radio network temporary identifier (radio network temporary identifier, RNTI) for the terminal device. The TC-RNTI is an RNTI for scrambling the downlink data to be early transmitted.

S35: The terminal device sends a Msg3 to the base station 1 based on the TA and the UL grant in the RAR message, where the Msg3 includes the ID, security information, and the like of the terminal device.

S36: The base station 1 sends a downlink data request (DL data request) message to the anchor base station, and the anchor base station receives the downlink data request message from the base station 1.

After the base station 1 receives the Msg3 from the terminal device, because a downlink data packet to be sent to the terminal device is stored in the anchor base station, the base station 1 requests the downlink data packet for the terminal device from the anchor base station.

S37: The anchor base station sends the downlink data packet for the terminal device to the base station 1, and the base station 1 receives the downlink data packet from the anchor base station.

In addition, the terminal device starts to blindly detect a physical downlink control channel (physical downlink control channel, PDCCH) by using the TC-RNTI.

S38: The base station 1 schedules the downlink data packet for the terminal device by using the TC-RNTI, and the terminal device receives the downlink data packet from the base station 1. The base station 1 sends the downlink data packet to the terminal device by using a Msg4.

S39: The terminal device sends, by using the uplink TA indicated by the RAR message, an acknowledgment (ACK) to the base station 1 on the UL grant indicated by the RAR message, and the base station 1 receives the ACK from the terminal device. The ACK indicates that the terminal device receives the downlink data that is early transmitted. S40: The base station 1 sends an ACK to the anchor base station, and the anchor base station receives the ACK from the base station 1. The ACK indicates that the terminal device receives the downlink data that is early transmitted.

It can be learned that currently, the terminal device can perform early data transmission only through the 4-step RACH. However, the 4-step RACH has a large quantity of steps and a long latency, and cannot be well applied to early transmission of data with a high latency requirement.

In view of this, the technical solutions in embodiments of this application are provided. In embodiments of this application, for example, a second network device may indicate, by using a second message, a terminal device to use a 2-step RACH or a 4-step RACH in a random access procedure. For example, the random access procedure is used for early downlink-data transmission, so that the terminal device can perform early downlink-data transmission through the 2-step RACH. The 2-step RACH requires a small quantity of steps, so that a network access latency can be reduced. This is conducive to meeting early transmission of data with a high latency requirement. In addition, the second network device may determine, based on different cases, to use the 2-step RACH or the 4-step RACH, so that an early downlink-data transmission process is more flexible. Certainly, the random access procedure may alternatively not be applied to the early downlink-data transmission, but may be used, for example, by the terminal device to enter an RRC connected state. In this case, the second network device may indicate a first random access type to the terminal device, and the terminal device does not need to perform selection, to reduce load of the terminal device.

The technical solutions provided in embodiments of this application may be applied to a 4th generation mobile communication technology (4th generation, 4G) system, for example, an LTE system, may be applied to a 5G system, for example, an NR system, or may be applied to a next-generation mobile communication system or another similar communication system. This is not specifically limited.

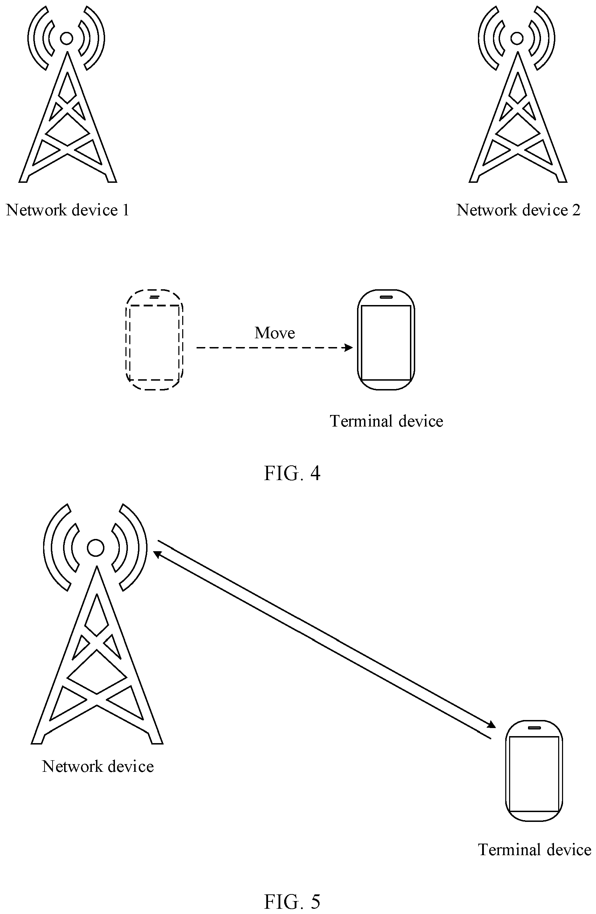

FIG. 4 shows an application scenario according to an embodiment of this application. FIG. 4 includes a network device 1, a network device 2, and a terminal device. For example, the terminal device is initially in an RRC connected state through the network device 1. Then, the terminal device is released by the network device 1, but a context of the terminal device is stored in the network device 1. In other words, the network device 1 is an anchor (anchor) base station of the terminal device. Subsequently, the terminal device moves into coverage of the network device 2. In this case, the terminal device camps on the network device 2. In other words, the network device 2 is a network device on which the terminal device currently camps, namely, a serving (serving) network device of the terminal device.

The network device 1 operates, for example, in an evolved universal mobile telecommunications system terrestrial radio access (evolved UMTS terrestrial radio access, E-UTRA) system, an NR system, a next-generation communication system, or another communication system. The network device 2 operates, for example, in the E-UTRA system, the NR system, the next-generation communication system, or another communication system. The network device 1 and the network device 2 may operate in a same communication system, for example, both operate in the E-UTRA system. Alternatively, the network device 1 and the network device 2 may operate in different communication systems. For example, the network device 1 operates in the E-UTRA system, and the network device 2 operates in the NR system.

FIG. 5 shows another application scenario according to an embodiment of this application. FIG. 5 includes a network device and a terminal device. For example, the terminal device is initially in an RRC connected state through the network device. Then, the terminal device is released by the network device, but a context of the terminal device is stored in the network device. In other words, the network device is an anchor base station of the terminal device. Subsequently, the terminal device does not move; or although the terminal device moves, the terminal device is still within coverage of the network device. In other words, the anchor network device of the terminal device is a network device on which the terminal device currently camps.

The network device operates, for example, in an E-UTRA system, an NR system, a next-generation communication system, or another communication system.

The network device in FIG. 4 or FIG. 5 is, for example, a base station. The network device corresponds to different devices in different systems. For example, the network device may correspond to an eNB in a 4G system, and correspond to a 5G access network device, for example, a gNB, in a 5G system. Certainly, the technical solutions provided in embodiments of this application may also be applied to a future mobile communication system. Therefore, the network device in FIG. 4 or FIG. 5 may also correspond to a network device in the future mobile communication system. FIG. 4 or FIG. 5 uses an example in which the network device is the base station. Actually, with reference to the foregoing descriptions, the network device may alternatively be an RSU or another device. In addition, FIG. 4 or FIG. 5 uses an example in which the terminal device is a mobile phone. Actually, it may be learned based on the foregoing descriptions of the terminal device that the terminal device in embodiments of this application is not limited to the mobile phone.

With reference to the accompanying drawings, the following describes a method provided in embodiments of this application. It should be noted that the concept of "early data transmission" in embodiments of this application may be understood as a general term, and any data transmission performed by a terminal device before the terminal device enters an RRC connected state may be referred to as the early data transmission. A configuration required for the early data transmission may be referred to as an early data transmission configuration. The early data transmission includes early uplink-data transmission or early downlink-data transmission. The early uplink-data transmission is also referred to as mobile originated (mobile originated) early data transmission, and the early downlink-data transmission is also referred to as mobile terminated (mobile terminated) early data transmission. This specification mainly focuses on the early downlink-data transmission. In some scenarios, the early data transmission may also be referred to as small-packet transmission.

In addition, the "early downlink-data transmission" in this specification refers to a process. For example, "performing early downlink-data transmission" means performing the process to transmit a downlink data packet. The downlink data packet transmitted in the early downlink-data transmission is referred to as a downlink data packet.

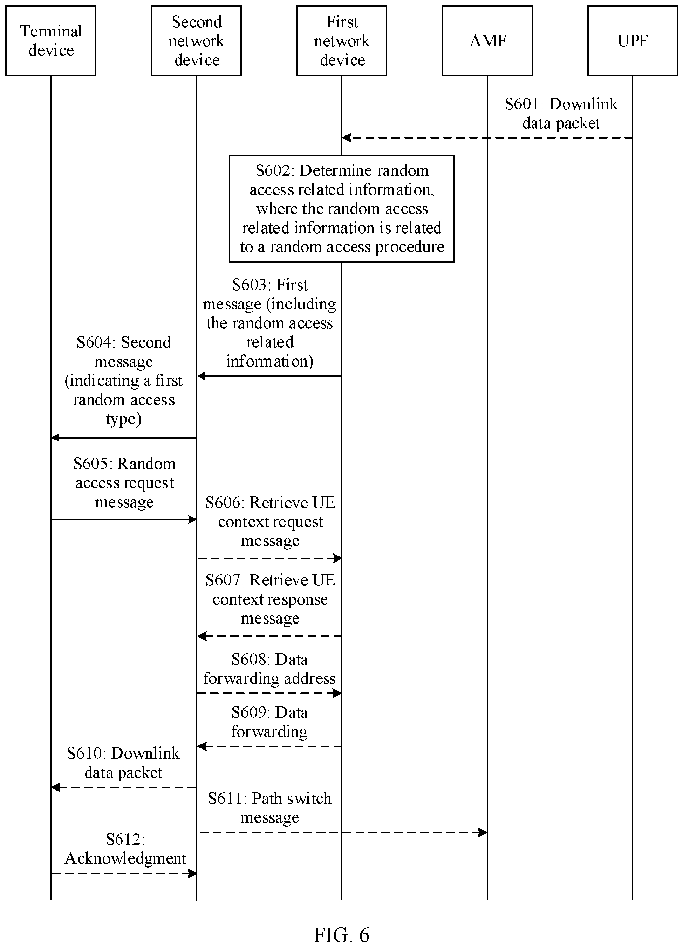

An embodiment of this application provides a first communication method. FIG. 6 is a flowchart of the method. The following description process uses an example in which the method is applied to the network architecture shown in FIG. 4 or FIG. 5. In this embodiment of this application, for example, a terminal device is in an RRC inactive state. For ease of description, the following uses an example in which the method is performed by a network device and the terminal device. This embodiment of this application uses an example in which this embodiment is applied to the network architecture shown in FIG. 4 or FIG. 5. Therefore, if this embodiment of this application is applied to the network architecture shown in FIG. 4, in the following descriptions, a first network device may be the network device 1 in the network architecture shown in FIG. 4, a second network device may be the network device 2 in the network architecture shown in FIG. 4, and the terminal device may be the terminal device in the network architecture shown in FIG. 4. Alternatively, if this embodiment of this application is applied to the network architecture shown in FIG. 5, it indicates that an anchor network device of the terminal device and a network device on which the terminal device currently camps are a same network device. In this case, in the following descriptions, a first network device and a second network device are a same network device, and both may be the network device in the network architecture shown in FIG. 5, and the terminal device may be the terminal device in the network architecture shown in FIG. 5.

S601: A UPF sends a downlink data packet for the terminal device to the first network device, and the first network device receives the downlink data packet for the terminal device from the UPF.

When the UPF has the downlink data packet to be sent to the terminal device, the UPF may send the downlink data packet for the terminal device to an anchor network device of the terminal device, where the anchor network device of the terminal device is the first network device. It should be noted that there may be one or more downlink data packets in S601.

S602: The first network device determines random access related information.

The random access related information may include one or more of the following: random access indication information, random access capability information, random access mode information, an early downlink-data transmission indication, and a size of the downlink data packet.

The random access indication information may indicate an access type (or referred to as a random access type) in a random access procedure. For example, the random access indication information may indicate a first random access type, and the first random access type is a 2-step RACH or a 4-step RACH. For example, if the downlink data packet has a high latency requirement or is urgent, the first network device may determine that the first random access type is the 2-step RACH. If the downlink data packet has a low latency requirement or is not an urgent service, the first network device may determine that the first random access type is the 4-step RACH. Certainly, the 2-step RACH or the 4-step RACH is selected based on an internal implementation of the first network device. This is not limited in this embodiment of this application.

The random access capability information may include information about a random access type supported by the terminal device. For example, if the terminal device supports the 2-step RACH, the random access capability information may include information about the 2-step RACH, or include information about the 2-step RACH and information about the 4-step RACH. Alternatively, if the terminal device does not support the 2-step RACH, the random access capability information may include information about the 4-step RACH, or may be null. Usually, the terminal device supports the 4-step RACH by default, but not all terminal devices can support the 2-step RACH. Therefore, the random access capability information may include the information about the 4-step RACH, or may not include the information about the 4-step RACH. However, if the terminal device supports the 2-step RACH, the random access capability information may include the information about the 2-step RACH. Before entering the RRC inactive state, the terminal device is in an RRC connected state within coverage of the first network device. In this case, the terminal device in the RRC connected state may send capability information of the terminal device to the first network device, so that the first network device can obtain the capability information of the terminal device. The capability information may include the random access capability information. Therefore, the first network device can learn of the random access capability information.

The random access mode information may indicate to use a CBRA mode or a CFRA mode in the random access procedure. Compared with the CBRA mode, the CFRA mode has a shorter latency. For example, if the downlink data packet has a high latency requirement or is urgent, the first network device may determine to use the CFRA mode in the random access procedure. If the downlink data packet has a low latency requirement or is not an urgent service, the first network device may determine to use the CBRA mode in the random access procedure. In addition, if the CFRA mode is used, a dedicated resource for sending a Msg1 or a MsgA needs to be reserved for the terminal device. This imposes a specific requirement on available resources of the first network device. In this case, for example, if the first network device has a large quantity of available resources, the first network device may determine to use the CFRA mode in the random access procedure. If the first network device has a small quantity of available resources, the first network device may determine to use the CBRA mode in the random access procedure. Certainly, the CBRA mode or the CFRA mode is selected based on the internal implementation of the first network device. This is not limited in this embodiment of this application.

In this embodiment of this application, the random access mode information may be determined by the first network device, or may be determined by the second network device. If the first network device determines the random access mode information, the random access related information may include the random access mode information. Alternatively, if the second network device determines the random access mode information, the random access related information may not include the random access mode information.

The early downlink-data transmission indication may indicate to transmit the downlink data packet in the random access procedure. In this embodiment of this application, the first network device may determine whether to perform early downlink-data transmission, in other words, determine whether to transmit the downlink data packet in the random access procedure. In this case, if the first network device determines to perform early downlink-data transmission, the random access related information may include the early downlink-data transmission indication. For example, the first network device may determine, based on the size of the downlink data packet to be transmitted to the terminal device, whether to perform early downlink-data transmission. If the size of the downlink data packet is greater than or equal to a first threshold, the first network device may determine to send the downlink data packet to the terminal device not through the early downlink-data transmission. In this case, the random access related information may not include the early downlink-data transmission indication, and the first network device needs to send the downlink data packet to the terminal device after the terminal device enters the RRC connected state from the RRC inactive state. This process is not concerned in this embodiment of this application. For this process, refer to an existing technology. Details are not described. If the size of the downlink data packet is less than the first threshold, the first network device may determine to send the downlink data packet to the terminal device through the early downlink-data transmission. In this case, the random access related information may include the early downlink-data transmission indication. Alternatively, in this embodiment of this application, the second network device may determine whether to perform early downlink-data transmission. In this case, the first network device does not need to determine whether to perform early downlink-data transmission, and a first message includes the size of the downlink data packet. Then, the second network device determines, based on the size of the downlink data packet, whether to perform early downlink-data transmission. In this case, the random access related information does not include the early downlink-data transmission indication either.

For example, the early downlink-data transmission indication may indicate that the downlink data packet to be transmitted to the terminal device is MT-EDT.

The size of the downlink data packet is the size of the downlink data packet to be transmitted to the terminal device. The downlink data packet to be transmitted to the terminal device is the downlink data packet received by the first network device from the UPF in S601.

Optionally, it may alternatively be considered that the random access related information includes the random access indication information or the random access capability information. In other words, the random access related information needs to include one of the two types of information. In this embodiment of this application, the first network device may determine the first random access type, or the second network device may determine the first random access type. If the first network device determines the first random access type, the random access related information may include the random access indication information. In addition, because the first network device has determined the first random access type, the second network device does not need to learn of a random access capability of the terminal device. Therefore, in this case, the random access related information may not include the random access capability information. Alternatively, if the second network device determines the first random access type, the random access related information may not include random access indication information. If the second network device determines the first random access type, the second network device needs to learn of a random access capability of the terminal device. Because some terminal devices may not support the 2-step RACH, the second network device can determine the first random access type only when learning of the random access capability of the terminal device. Therefore, if the second network device determines the first random access type, the random access related information may include the random access capability information.

One or more of the three types of information, namely, the random access mode information, the early downlink-data transmission indication, or the size of the downlink data packet, may be optionally included in the random access related information, but is not necessarily included in the random access related information. For example, the first network device may determine the random access mode information. In this case, the random access related information may include the random access mode information. Alternatively, the second network device determines the random access mode information. In this case, the random access related information may not include the random access mode information. For another example, the first network device may determine whether to perform early downlink-data transmission. In this case, the random access related information may include the early downlink-data transmission indication. Alternatively, the second network device determines whether to perform early downlink-data transmission. In this case, the random access related information may not include the early downlink-data transmission indication. For still another example, the first network device may determine whether to perform early downlink-data transmission. In this case, the random access related information may not include the size of the downlink data packet. Alternatively, the second network device determines whether to perform early downlink-data transmission. In this case, the random access related information may include the size of the downlink data packet.

For example, the random access related information includes the random access indication information. Alternatively, the random access related information includes the random access capability information. Alternatively, the random access related information includes the random access indication information and the early downlink-data transmission indication. Alternatively, the random access related information includes the random access indication information, the random access mode information, and the early downlink-data transmission indication. Alternatively, the random access related information includes the random access indication information and the random access mode information. Alternatively, the random access related information includes the random access capability information and the size of the downlink data packet. Alternatively, the random access related information includes the random access capability information, the random access mode information, and the size of the downlink data packet. Alternatively, the random access related information includes the random access capability information and the random access mode information.

S603: The first network device sends the first message to the second network device, and the second network device receives the first message from the first network device. The first message may include the random access related information.

It should be noted that the first message herein is not the Msg1, but is only a general term of a message. For example, the first message may be a paging (PAGING) message, for example, a radio access network (radio access network, RAN) paging message. Certainly, the first message may alternatively be another type of message in addition to the paging message, for example, may be an independent message for transmitting the random access related information. For example, the first message may be a message transmitted through an X2 interface between the first network device and the second network device. Alternatively, if the random access related information includes the random access capability information, the first message may be a UE capability information (UE capability information) message or the like. Alternatively, if the random access related information includes other information, the first message may be another corresponding message.

If the anchor network device of the terminal device and the network device on which the terminal device currently camps are the same network device, in other words, the first network device and the second network device are the same network device, S603 does not need to be performed.

S604: The second network device sends a second message, and the terminal device receives the second message from the second network device. The second message may indicate to use the first random access type in the random access procedure. "Using the first random access type" described in this specification may be understood as "performing random access by using the first random access type". For example, if the first random access type is the 4-step RACH, using the first random access type may be understood as performing random access by using the 4-step RACH. For another example, if the first random access type is the 2-step RACH, using the first random access type may be understood as performing random access by using the 2-step RACH.

It should be noted that the second message herein is not a Msg2, but is only a general term of a message. For example, the second message may be a paging message, or the second message may be a message of another type.

The second network device may obtain the random access related information based on the first message. If the random access related information includes the random access indication information, the second network device may determine the first random access type based on the random access indication information without further determining the first random access type. If the random access related information does not include the random access indication information, the second network device further needs to determine the first random access type. For example, although the random access related information does not include the random access indication information, the random access related information may include the random access capability information. In this case, the second network device may determine the first random access type based on the random access capability information. For example, if the random access capability information indicates that the terminal device supports the 2-step RACH, the second network device may determine that the first random access type is the 2-step RACH or the 4-step RACH. Alternatively, if the random access capability information indicates that the terminal device supports the 4-step RACH, the second network device may determine that the first random access type is the 4-step RACH.

Optionally, the second message may further include the early downlink-data transmission indication (only when the early downlink-data transmission needs to be performed). Alternatively, the second message may further include the random access mode information. Alternatively, the second message may further include the early downlink-data transmission indication and the random access mode information (only when the early downlink-data transmission needs to be performed). The early downlink-data transmission indication included in the second message may be determined by the first network device, and is included in the random access related information. In this case, the second network device may determine, based on the random access related information, that the early downlink-data transmission needs to be performed. Alternatively, the early downlink-data transmission indication may be determined by the second network device, and is not included in the random access related information. For example, the random access related information includes the size of the downlink data packet, and the second network device may determine, based on the size of the downlink data packet, whether to perform early downlink-data transmission. For example, if the size of the downlink data packet is greater than or equal to the first threshold, the second network device may determine not to send the downlink data packet to the terminal device through the early downlink-data transmission. In this case, the second message may not include the early downlink-data transmission indication, and the second network device needs to send the downlink data packet to the terminal device after the terminal device enters the RRC connected state from the RRC inactive state. If the size of the downlink data packet is less than the first threshold, the second network device may determine to send the downlink data packet to the terminal device through the early downlink-data transmission. In this case, the second message may include the early downlink-data transmission indication.

Similarly, the random access mode information included in the second message may be determined by the first network device, and is included in the random access related information. Alternatively, the random access related information does not include the random access mode information, but the second network device determines the random access mode information. For a method used by the second network device to determine the random access mode information, refer to the descriptions of the method used by the first network device to determine the random access mode information in S602.

Certainly, how to determine the first random access type, how to determine whether to perform early downlink-data transmission, how to determine to use the CBRA mode or the CFRA mode in the random access procedure, or the like depends on an internal implementation of the second network device. This is not limited in this embodiment of this application.

In addition, the second message may further include other information. This is not limited.

In addition, if the second network device determines the first random access type, the second network device may determine a corresponding random access resource. For example, if the first random access type is the 4-step RACH, the second network device may determine a 4-step RACH resource. Alternatively, if the first random access type is the 2-step RACH, the second network device may determine a 2-step RACH resource. The second network device may indicate the determined random access resource by using the second message, so that the terminal device can perform random access on the random access resource.

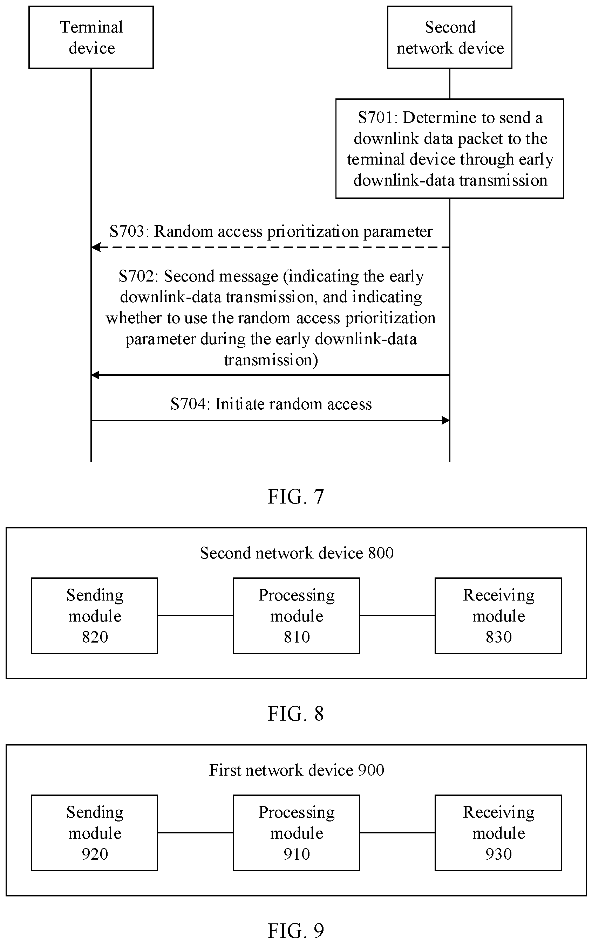

Optionally, the second network device may further determine whether to use a random access prioritization (RA-prioritization) parameter during the random access, and the second network device may indicate a determining result by using the second message. In other words, the second message may further indicate whether to use the random access prioritization parameter during the random access. If the early downlink-data transmission is to be performed, the second network device may determine whether to use the random access prioritization parameter during the early downlink-data transmission. If the early downlink-data transmission is not to be performed, the second network device may determine whether to use the random access prioritization parameter during the random access. In this embodiment of this application, the random access prioritization parameter may be used to accelerate the random access procedure. For example, the random access prioritization parameter may include a ramping step, include a scaling factor, or include a ramping step and a scaling factor. The ramping step is used to determine transmit power for a next random access request message when a random access response message fails to be received, and the scaling factor is used to determine backoff duration that lasts before a next random access procedure is initiated. The random access response message herein may be the Msg2 or a MsgB. The random access prioritization parameter, content included in the random access prioritization parameter, and the like are described in the following embodiment shown in FIG. 7. Therefore, reference may be made to related content in the following embodiment shown in FIG. 7.

In addition, if the second message may further indicate whether to use the random access prioritization parameter during the random access, before S604, the second network device may further send the random access prioritization parameter, and the terminal device receives the random access prioritization parameter from the second network device. For example, the second network device may send the random access prioritization parameter by using a system message, and a plurality of terminal devices may receive the random access prioritization parameter. In this way, if the second message indicates to use the random access prioritization parameter during the random access, the terminal device may learn of the content included in the random access prioritization parameter.

S605: The terminal device sends a random access request message to the second network device, and the second network device receives the random access request message from the terminal device.

The terminal device may initiate the random access based on the first random access type indicated by the second message, and send the random access request message to the second network device. If the first random access type is the 4-step RACH, the random access request message is the Msg1. Alternatively, if the first random access type is the 2-step RACH, the random access request message is the MsgA. In addition, if the second message indicates the corresponding random access resource, the terminal device may send the random access request message on the random access resource.

In an optional implementation, if the terminal device does not receive a RAR message or the MsgB from the network device after sending the random access request message, the terminal device may perform power ramping, to perform random access again, in other words, perform S605 again. If the second message indicates to use the random access prioritization parameter during the random access, and the random access prioritization parameter includes the ramping step, when needing to perform power ramping, the terminal device uses the ramping step included in the random access prioritization parameter. In this embodiment of this application, the ramping step included in the random access prioritization parameter may be greater than a common ramping step. In this case, when the terminal device performs power ramping, transmit power is increased by a large amount. Therefore, a quantity of times that the terminal device initiates random access can be reduced, and a random access success rate of the terminal device can be improved.

In an optional implementation, if the second network device sends a backoff indicator to the terminal device by using the RAR message or the MsgB, the backoff indicator may indicate backoff duration. In this case, if the second message indicates to use the random access prioritization parameter during the random access, and the random access prioritization parameter includes the scaling factor, the terminal device may determine final backoff duration based on the backoff duration and the scaling factor, and back off based on the final backoff duration. For example, the terminal device may multiply the backoff duration by the scaling factor, and a product may be used as the final backoff duration. Certainly, the terminal device may alternatively obtain the final backoff duration in another manner. The backoff duration determined based on the scaling factor provided in this embodiment of this application may be less than the backoff duration directly indicated by the second network device. Therefore, when the terminal device backs off, the backoff duration is short, so that a random access latency of the terminal device can be reduced.

S606: The second network device sends a retrieve UE context request (retrieve UE context request) message to the first network device, and the first network device receives the retrieve UE context request message from the second network device.

The retrieve UE context request message is used to request to obtain a context of the terminal device. Because the context of the terminal device is stored in the first network device, the second network device may request to obtain the context of the terminal device from the first network device.

S607: The first network device sends a retrieve UE context response (retrieve UE context response) message to the second network device, and the second network device receives the retrieve UE context response message from the first network device.

The first network device may send the retrieve UE context response message including the context of the terminal device to the second network device, so that the second network device can obtain the context of the terminal device. S608: The second network device sends a data forwarding address (data forwarding address) to the first network device, and the first network device receives the data forwarding address from the second network device.

This step is used by the second network device to request, from the first network device, the downlink data packet to be sent to the terminal device, namely, the downlink data packet that needs to be sent to the terminal device through the downlink early transmission.

S609: The first network device sends data forwarding (data forwarding) to the second network device, and the second network device receives the data forwarding from the first network device.

The data forwarding means that the second network device sends, to the first network device, the downlink data packet to be sent to the terminal device.

If the anchor network device of the terminal device and the network device on which the terminal device currently camps are the same network device, S606 to S609 do not need to be performed.

S610: The second network device sends the downlink data packet to the terminal device, and the terminal device receives the downlink data packet from the second network device.

For example, if the terminal device performs the 4-step RACH, the second network device may send the downlink data packet to the terminal device by using a Msg4. Alternatively, if the terminal device performs the 2-step RACH, the second network device may send the downlink data packet to the terminal device by using the MsgB.

In an optional implementation, if the terminal device uses the CBRA mode, and fails in Msg4 contention resolution, the terminal device may perform power ramping to perform random access again, in other words, perform S605 again. If the second message indicates to use the random access prioritization parameter during the random access, and the random access prioritization parameter includes the ramping step, when needing to perform power ramping, the terminal device uses the ramping step included in the random access prioritization parameter. In this embodiment of this application, the ramping step included in the random access prioritization parameter may be greater than the common ramping step. In this case, when the terminal device performs power ramping, the transmit power is increased by a large amount. Therefore, the random access success rate of the terminal device can be improved.

S611: The second network device sends a path switch (path switch) message to an AMF, and the AMF receives the path switch message from the second network device.

The path switch message is used to notify the AMF that if there is downlink data for the terminal device subsequently, the downlink data is to be sent to the second network device, and does not need to be sent to the first network device. S612: The terminal device sends an acknowledgment (ACK) to the second network device, and the second network device receives the ACK from the terminal device.

If the terminal device successfully receives downlink data, the terminal device sends the ACK to the second network device. In this way, the early downlink-data transmission is completed.

S601 and S606 to S612 are all optional steps, and are not mandatory. Therefore, S601 and S606 to S612 are represented by dashed lines in FIG. 6. In addition, some other steps may be further included, and details are not described herein. In this embodiment of this application, for example, the first network device or the second network device may determine that the terminal device is to select the 2-step RACH or the 4-step RACH during the early downlink-data transmission, and the second network device may give an indication to the terminal device by using the second message, so that the terminal device may perform early data transmission through the 2-step RACH. The 2-step RACH requires a small quantity of steps, so that a network access latency can be reduced. This is conducive to meeting early transmission of data with a high latency requirement. The first network device or the second network device may determine, based on different cases, to use the 2-step RACH or the 4-step RACH, so that an early data transmission process is more flexible. In addition, whether to perform early downlink-data transmission may be determined by the first network device, or may be determined by the second network device. This manner is flexible.

To resolve the same technical problem, an embodiment of this application further provides a second communication method. FIG. 7 is a flowchart of the method. The following description process uses an example in which the method is applied to the network architecture shown in FIG. 4 or FIG. 5. In this embodiment of this application, for example, a terminal device is in an RRC inactive state.

For ease of description, the following uses an example in which the method is performed by a network device and the terminal device. This embodiment of this application uses an example in which this embodiment is applied to the network architecture shown in FIG. 4 or FIG. 5. Therefore, if this embodiment of this application is applied to the network architecture shown in FIG. 4, in the following descriptions, a first network device may be the network device 1 in the network architecture shown in FIG. 4, a second network device may be the network device 2 in the network architecture shown in FIG. 4, and the terminal device may be the terminal device in the network architecture shown in FIG. 4. Alternatively, if this embodiment of this application is applied to the network architecture shown in FIG. 5, it indicates that an anchor network device of the terminal device and a network device on which the terminal device currently camps are a same network device. In this case, in the following descriptions, a first network device and a second network device are a same network device, and both may be the network device in the network architecture shown in FIG. 5, and the terminal device may be the terminal device in the network architecture shown in FIG. 5.

S701: The second network device determines to send a downlink data packet to the terminal device through early downlink-data transmission. The second network device is the network device on which the terminal device currently camps.

If the anchor network device of the terminal device and the network device on which the terminal device currently camps are the same network device, the second network device in this embodiment of this application may also be the first network device. The first network device is the anchor network device of the terminal device.

For example, before S701 is performed, S31 shown in FIG. 3 may be further performed. The second network device may be the base station 1, and the second network device may determine, based on the paging message 1 from the anchor network device, to send the downlink data packet to the terminal device through the early downlink-data transmission.

For another example, before S701 is performed, S601 to S603 shown in FIG. 6 may be further performed. To be specific, the second network device may determine, based on the early downlink-data transmission indication included in the random access related information from the first network device, to send the downlink data packet to the terminal device through the early downlink-data transmission. Alternatively, the second network device may autonomously determine, for example, based on a size of the downlink data packet to be transmitted to the terminal device, to send the downlink data packet to the terminal device through the early downlink-data transmission.

In this embodiment of this application, the second network device may further determine whether to use a random access prioritization parameter during the early downlink-data transmission.

In a normal random access procedure of the terminal device, due to a contention relationship between a plurality of terminal devices, a channel condition limitation, or the like, a base station may not receive a preamble or a MsgA sent by the terminal device. In this case, the base station does not send a Msg2 or a MsgB to the terminal device, and the terminal device cannot receive the Msg2 or the MsgB, or may fail in Msg4 conflict resolution. In this case, the terminal device performs power ramping to perform random access again. To be specific, when the terminal device sends the preamble or the MsgA next time, the terminal device increases transmit power, where an amount by which the transmit power is increased each time is referred to as a ramping step. In addition, when a network is busy, a RAR message or the MsgB includes a backoff indicator (backoff indicator), and the backoff indicator indicates the terminal device to back off for a period of time before initiating next random access. After receiving the backoff indicator, the terminal device may back off for the period of time based on the backoff indicator, and then initiate the next random access. However, in some special scenarios such as a cell handover scenario, the terminal device needs to quickly access a network. Therefore, a RA prioritization mechanism is provided. In this embodiment of this application, the random access prioritization (RA prioritization) parameter may include the ramping step, include a scaling factor, or include the ramping step and a scaling factor. The ramping step is used to determine transmit power for a next random access request message when a random access response message fails to be received, and the scaling factor is used to determine backoff duration that lasts before a next random access procedure is initiated. The random access response message herein may be the Msg2 or the MsgB.

In this embodiment of this application, the ramping step included in the random access prioritization parameter may be greater than a common ramping step. If the terminal device determines to use the random access prioritization parameter, and the random access prioritization parameter includes the ramping step, when the terminal device needs to perform power ramping, the terminal device uses the ramping step included in the random access prioritization parameter. In this case, when the terminal device performs power ramping, the transmit power is increased by a large amount. Therefore, a quantity of times that the terminal device initiates random access can be reduced, and a random access success rate of the terminal device can be improved.

If the terminal device determines to use the random access prioritization parameter, and the random access prioritization parameter includes the scaling factor, and if the second network device indicates the terminal device to back off, the second network device sends the backoff indicator to the terminal device by using the RAR message or the MsgB. The backoff indicator may indicate backoff duration. The terminal device may determine final backoff duration based on the backoff duration and the scaling factor, and back off based on the final backoff duration. For example, the terminal device may multiply the backoff duration by the scaling factor, and a product may be used as the final backoff duration. Certainly, the terminal device may alternatively obtain the final backoff duration in another manner. The backoff duration determined based on the scaling factor provided in this embodiment of this application may be less than the backoff duration directly indicated by the second network device. If the terminal device determines to use the random access prioritization parameter, and the random access prioritization parameter includes the scaling factor, when the terminal device needs to back off, the terminal device uses the backoff duration determined based on the scaling factor. In this case, when the terminal device backs off, the backoff duration is short, to reduce a random access latency of the terminal device.

In conclusion, it can be learned that in this embodiment of this application, the random access prioritization parameter may be used to accelerate the random access procedure. This may be understood as follows: After using the random access prioritization parameter, the terminal device can quickly complete the random access. For example, if the random access prioritization parameter includes the ramping step, the random access prioritization parameter can reduce the quantity of times that the terminal device initiates random access, and improve the random access success rate of the terminal device, to accelerate the random access procedure. For another example, if the random access prioritization parameter includes the scaling factor, the random access prioritization parameter may enable the terminal device to initiate the random access as soon as possible, to accelerate the random access procedure.

S702: The second network device sends a second message, and the terminal device receives the second message from the second network device. The second message indicates the early downlink-data transmission, and indicates whether to use the random access prioritization parameter during the early downlink-data transmission.

It should be noted that the second message herein is not the Msg2, but is only a general term of a message. For example, the second message may be a paging message, or the second message may be a message of another type.

The second message indicates the early downlink-data transmission. For example, the second message may include an early downlink-data transmission indication, and the early downlink-data transmission indication may indicate the early downlink-data transmission, or indicate to send the downlink data packet to the terminal device in the random access procedure.

If S601 to S603 shown in FIG. 6 are further performed before S701, the second message may further indicate information such as the first random access type. In this case, the second message in this embodiment of this application may be the second message in the embodiment shown in FIG. 6. For this, refer to the descriptions of the embodiment shown in FIG. 6.

In addition, before S702, S703 may be further performed: The second network device sends the random access prioritization parameter, and the terminal device receives the random access prioritization parameter from the second network device. For example, the second network device may send the random access prioritization parameter by using a system message, and a plurality of terminal devices may receive the random access prioritization parameter. S703 may be performed before or after S701, or may be simultaneously performed with S701. FIG. 7 uses an example in which S703 is performed before S701. S703 is an optional step, and is not mandatory. Therefore, S703 is represented by a dashed line in FIG. 7.

S704: The terminal device initiates the random access. For example, the terminal device sends a random access request message to the network device. If the terminal device uses a 4-step RACH, the random access request message is the preamble. Alternatively, if the terminal device uses a 2-step RACH, the random access request message is the MsgA. The terminal device uses the random access prioritization parameter in the random access procedure.

If the terminal device does not receive the RAR message or the MsgB from the network device after sending the random access request message, the terminal device may perform power ramping, to perform random access again, in other words, perform S704 again. Alternatively, if the terminal device uses a CBRA mode, and fails in Msg4 contention resolution, the terminal device may perform power ramping to perform random access again, in other words, perform S704 again. If the second message indicates to use the random access prioritization parameter during the random access, and the random access prioritization parameter includes the ramping step, when needing to perform power ramping, the terminal device uses the ramping step included in the random access prioritization parameter. In this embodiment of this application, the ramping step included in the random access prioritization parameter may be greater than the common ramping step. In this case, when the terminal device performs power ramping, the transmit power is increased by a large amount. Therefore, the random access success rate of the terminal device can be improved.

If the second network device sends the backoff indicator to the terminal device by using the RAR message or the MsgB, the backoff indicator may indicate the backoff duration. In this case, if the second message indicates to use the random access prioritization parameter during the random access, and the random access prioritization parameter includes the scaling factor, the terminal device may determine the final backoff duration based on the backoff duration and the scaling factor, and back off based on the final backoff duration. For example, the terminal device may multiply the backoff duration by the scaling factor, and the product may be used as the final backoff duration. Certainly, the terminal device may alternatively obtain the final backoff duration in another manner. The backoff duration determined based on the scaling factor provided in this embodiment of this application may be less than the backoff duration directly indicated by the second network device. Therefore, when the terminal device backs off, the backoff duration is short, so that the random access latency of the terminal device can be reduced.

If S601 to S603 shown in FIG. 6 are further performed before S701, the second message may further indicate the information such as the first random access type, and the terminal device may initiate the random access based on the first random access type. For example, if the first random access type is the 2-step RACH, the terminal device performs the 2-step RACH. Alternatively, if the first random access type is the 4-step RACH, the terminal device performs the 4-step RACH.

Alternatively, if S31 shown in FIG. 3 is performed before S701, or the second message does not indicate the first random access type, the terminal device may have a different processing manner. For example, the terminal device may directly select the 4-step RACH without much determining, to reduce a determining process of the terminal device, and reduce the random access latency as much as possible. Alternatively, if the terminal device supports the 2-step RACH, the terminal device may perform selection, to determine to use the 4-step RACH or the 2-step RACH. For example, the terminal device may receive a reference signal from the second network device, and the reference signal is, for example, a synchronization signal and physical broadcast channel block (synchronization signal and physical broadcast channel block, SSB) or a channel state information reference signal (channel state information reference signal, CSI-RS). The terminal device may measure the reference signal to obtain a measurement result. For example, the measurement result is reference signal received power (reference signal received power, RSRP), reference signal received quality (reference signal received quality, RSRQ), or a signal to interference plus noise ratio (signal to interference plus noise ratio, SINR). If a value corresponding to the measurement result is greater than a second threshold, the terminal device may select the 2-step RACH. If a value corresponding to the measurement result is less than or equal to a second threshold, the terminal device may select the 4-step RACH.

In this embodiment of this application, the random access prioritization parameter may be used in an early downlink-data transmission process. For example, if a downlink data packet that needs to be early transmitted has a high latency requirement, or the downlink data packet corresponds to an urgent service, transmission of the downlink data packet can be accelerated by using the technical solution in this embodiment of this application, to reduce a transmission latency, and meet a service requirement as much as possible.

With reference to the accompanying drawings, the following describes apparatuses configured to implement the foregoing methods in embodiments of this application. Therefore, all the foregoing content may be used in the following embodiments. Repeated content is not described again.

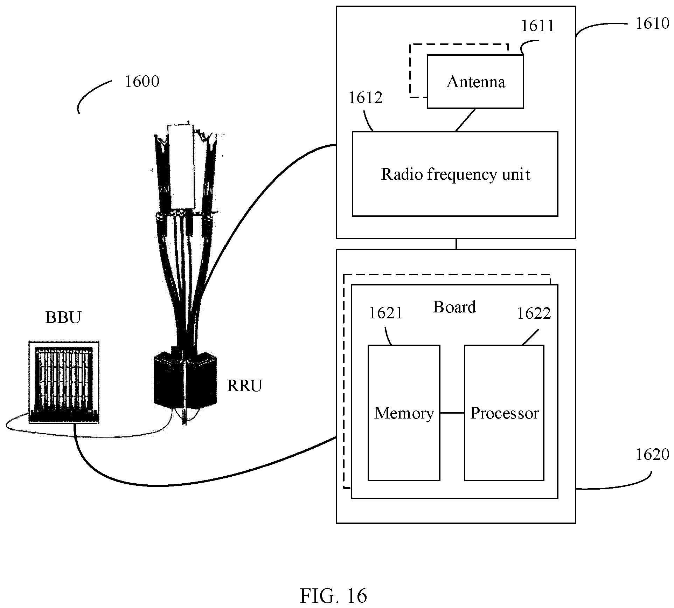

FIG. 16 is a schematic block diagram of a communication apparatus 1600 according to an embodiment of this application. For example, the communication apparatus 1600 is a second network device 800.

The second network device 800 includes a sending module 820 and a receiving module 830. Optionally, the second network device 800 may further include a processing module 810. For example, the second network device 800 may be a network device, a chip used in the network device, or another combined device or a component that has functions of the network device. When the second network device 800 is the network device, the sending module 820 may be a transmitter, and the receiving module 830 may be a receiver. The transmitter may include an antenna, a radio frequency circuit, and the like, and the receiver may also include an antenna, a radio frequency circuit, and the like. The transmitter and the receiver may belong to one functional module, for example, referred to as a transceiver; or the transmitter and the receiver may be functional modules independent of each other. The processing module 810 may be a processor, for example, a baseband processor. The baseband processor may include one or more central processing units (central processing units, CPUs). When the second network device 800 is the component having the functions of the network device, the sending module 820 and the receiving module 830 may be a radio frequency unit, and the processing module 810 may be a processor, for example, a baseband processor. When the second network device 800 is a chip system, the sending module 820 and the receiving module 830 may be an input/output interface of a chip (for example, a baseband chip) (where for example, the sending module 820 is the output interface, and the receiving module 830 is the input interface; or the input interface and the output interface are a same interface, and both the sending module 820 and the receiving module 830 are the interface), and the processing module 810 may be a processor of the chip system, and may include one or more central processing units. It should be understood that in this embodiment of this application, the processing module 810 may be implemented by a processor or a processor-related circuit component, the sending module 820 may be implemented by a transmitter or a transmitter-related circuit component, and the receiving module 830 may be implemented by a receiver or a receiver-related circuit component. For example, the processing module 810 may be configured to perform all operations, except sending and receiving operations, performed by the second network device in the embodiment shown in FIG. 6, for example, the operation of obtaining random access related information based on a first message or the operation of determining a first random access type, and/or configured to support another process of the technology described in this specification. The sending module 820 may be configured to perform all the sending operations, such as S604, S606, S608, S610, and S611, that are performed by the second network device in the embodiment shown in FIG. 6, and/or configured to support another process of the technology described in this specification. The receiving module 830 may be configured to perform all the receiving operations, such as S603, S605, S607, S609, and S612, that are performed by the second network device in the embodiment shown in FIG. 6, and/or configured to support another process of the technology described in this specification.

In addition, the sending module 820 and the receiving module 830 may be one functional module, and the functional module may be referred to as a transceiver module. The transceiver module can complete both the sending and receiving operations. For example, the transceiver module may be configured to perform all the sending and receiving operations performed by the second network device in the embodiment shown in FIG. 6. For example, when the sending operation is performed, it may be considered that the transceiver module is a sending module; when the receiving operation is performed, it may be considered that the transceiver module is a receiving module. Alternatively, the sending module 820 and the receiving module 830 may be two functional modules, and a transceiver module may be considered as a general term of the two functional modules. The sending module 820 is configured to complete the sending operation. For example, the sending module 820 may be configured to perform all the sending operations performed by the second network device in any one of the embodiments shown in FIG. 6. The receiving module 830 is configured to complete the receiving operation. For example, the receiving module 830 may be configured to perform all the receiving operations performed by the second network device in the embodiment shown in FIG. 6. The receiving module 830 is configured to receive the first message from a first network device, where the first message includes the random access related information.

The sending module 820 is configured to send a second message to a terminal device, where the second message indicates to use the first random access type in a random access procedure, and the first random access type is a 2-step RACH or a 4-step RACH.

The random access related information includes one or more of the following:
random access indication information, indicating the first random access type;
random access capability information, including information about a random access type supported by the terminal device;
random access mode information, indicating to use a CBRA mode or a CFRA mode in the random access procedure;
an early downlink-data transmission indication, indicating to transmit a downlink data packet in the random access procedure; and
a size of the downlink data packet.

In an optional implementation, the random access related information includes the random access capability information, and does not include the random access indication information. The processing module 810 is configured to determine the first random access type based on the random access capability information, where if the terminal device supports the 2-step RACH, the first random access type is the 2-step RACH or the 4-step RACH; or if the terminal device does not support the 2-step RACH, the first random access type is the 4-step RACH.

In an optional implementation, the second message further includes the early downlink-data transmission indication and/or the random access mode information.

In an optional implementation, the second message further indicates whether to use a random access prioritization parameter in the random access procedure, and the random access prioritization parameter is used to accelerate the random access procedure.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the sending module 820 is further configured to send the random access prioritization parameter to the terminal device.

In an optional implementation, the first message is a radio access network paging message, and/or the second message is a paging message.

For other functions that can be implemented by the second network device 800, refer to the related descriptions in the embodiment shown in FIG. 6. Details are not described again.

FIG. 16 is a schematic block diagram of a communication apparatus 900 according to an embodiment of this application. For example, the communication apparatus 900 is a first network device 900.

The first network device 900 includes a processing module 910 and a sending module 920, and optionally, may further include a receiving module 930. For example, the first network device 900 may be a network device, a chip used in the network device, or another combined device or a component that has functions of the network device. When the first network device 900 is the network device, the sending module 920 may be a transmitter, and the receiving module 930 may be a receiver. The transmitter may include an antenna, a radio frequency circuit, and the like, and the receiver may also include an antenna, a radio frequency circuit, and the like. The transmitter and the receiver may belong to one functional module, for example, referred to as a transceiver; or the transmitter and the receiver may be functional modules independent of each other. The processing module 910 may be a processor, for example, a baseband processor. The baseband processor may include one or more CPUs. When the first network device 900 is the component having the functions of the network device, the sending module 920 and the receiving module 930 may be a radio frequency unit, and the processing module 910 may be a processor, for example, a baseband processor. When the first network device 900 is a chip system, the sending module 920 and the receiving module 930 may be an input/output interface of a chip (for example, a baseband chip) (where for example, the sending module 920 is the output interface, and the receiving module 930 is the input interface; or the input interface and the output interface are a same interface, and both the sending module 920 and the receiving module 930 are the interface), and the processing module 910 may be a processor of the chip system, and may include one or more central processing units. It should be understood that in this embodiment of this application, the processing module 910 may be implemented by a processor or a processor-related circuit component, the sending module 920 may be implemented by a transmitter or a transmitter-related circuit component, and the receiving module 930 may be implemented by a receiver or a receiver-related circuit component. For example, the processing module 910 may be configured to perform all operations, except sending and receiving operations, performed by the first network device in the embodiment shown in FIG. 6, for example, S602, and/or configured to support another process of the technology described in this specification. The sending module 920 may be configured to perform all the sending operations, such as S603, S607, and S609, that are performed by the first network device in the embodiment shown in FIG. 6, and/or configured to support another process of the technology described in this specification. The receiving module 930 may be configured to perform all the receiving operations, such as S601, S606, and S608, that are performed by the first network device in the embodiment shown in FIG. 6, and/or configured to support another process of the technology described in this specification.

In addition, for implementations of the sending module 920 and the receiving module 930, refer to the descriptions of the implementations of the sending module 820 and the receiving module 830.

The processing module 910 is configured to determine random access related information.

The sending module 920 is configured to send a first message to a second network device, where the first message includes the random access related information.

The random access related information includes one or more of the following:
random access indication information, indicating an access type in a random access procedure;
random access capability information, including information about a random access type supported by a terminal device;
random access mode information, indicating to use a CBRA mode or a CFRA mode in the random access procedure;
an early downlink-data transmission indication, indicating to transmit a downlink data packet in the random access procedure; and
a size of the downlink data packet.

In an optional implementation, the processing module 910 is further configured to:
determine that the size of the downlink data packet is less than a first threshold; and
determine to transmit the downlink data packet in the random access procedure.

In an optional implementation, the first message is a radio access network paging message.

For other functions that can be implemented by the first network device 900, refer to the related descriptions in the embodiment shown in FIG. 6. Details are not described again.

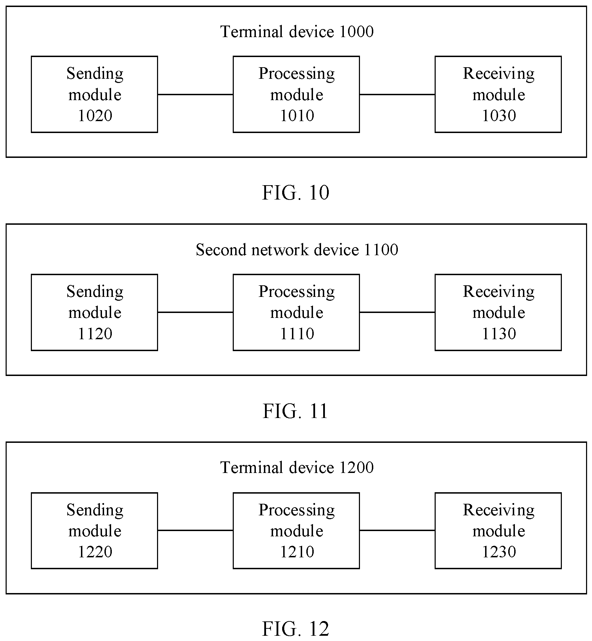

FIG. 10 is a schematic block diagram of a communication apparatus 1000 according to an embodiment of this application. For example, the communication apparatus 1000 is a terminal device 1000.

The terminal device 1000 includes a processing module 1010 and a receiving module 1030. Optionally, the terminal device 1000 may further include a sending module 1020. For example, the terminal device 1000 may be a terminal device, a chip used in the terminal device, or another combined device or a component that has functions of the terminal device. When the terminal device 1000 is the terminal device, the sending module 1020 may be a transmitter, and the receiving module 1030 may be a receiver. The transmitter may include an antenna, a radio frequency circuit, and the like, and the receiver may also include an antenna, a radio frequency circuit, and the like. The transmitter and the receiver may belong to one functional module, for example, referred to as a transceiver; or the transmitter and the receiver may be functional modules independent of each other. The processing module 1010 may be a processor, for example, a baseband processor. The baseband processor may include one or more CPUs. When the terminal device 1000 is the component having the functions of the terminal device, the sending module 1020 and the receiving module 1030 may be a radio frequency unit, and the processing module 1010 may be a processor, for example, a baseband processor. When the terminal device 1000 is a chip system, the sending module 1020 and the receiving module 1030 may be an input/output interface of a chip (for example, a baseband chip) (where for example, the sending module 1020 is the output interface, and the receiving module 1030 is the input interface; or the input interface and the output interface are a same interface, and both the sending module 1020 and the receiving module 1030 are the interface), and the processing module 1010 may be a processor of the chip system, and may include one or more central processing units. It should be understood that in this embodiment of this application, the processing module 1010 may be implemented by a processor or a processor-related circuit component, the sending module 1020 may be implemented by a transmitter or a transmitter-related circuit component, and the receiving module 1030 may be implemented by a receiver or a receiver-related circuit component.

For example, the processing module 1010 may be configured to perform all operations, except sending and receiving operations, performed by the terminal device in the embodiment shown in FIG. 6, for example, the operation of determining a first random access type based on a second message, and/or configured to support another process of the technology described in this specification. The sending module 1020 may be configured to perform all the sending operations, such as S605 and S612, that are performed by the terminal device in the embodiment shown in FIG. 6, and/or configured to support another process of the technology described in this specification. The receiving module 1030 may be configured to perform all the receiving operations, such as S604 and S610, that are performed by the terminal device in the embodiment shown in FIG. 6, and/or configured to support another process of the technology described in this specification.

In addition, for implementations of the sending module 1020 and the receiving module 1030, refer to the descriptions of the implementations of the sending module 820 and the receiving module 830.

The receiving module 1030 is configured to receive the second message from a second network device, where the second message indicates to use the first random access type in a random access procedure, and the first random access type is a 2-step RACH or a 4-step RACH.

The processing module 1010 is configured to initiate random access by using the first random access type, where the second message is a paging message.

In an optional implementation, the second message further includes an early downlink-data transmission indication and/or random access mode information, where the early downlink-data transmission indication indicates to transmit a downlink data packet in the random access procedure, and the random access mode information indicates to use a CBRA mode or a CFRA mode in the random access procedure.

In an optional implementation, the processing module 1010 is further configured to perform early downlink-data transmission in the random access procedure.

In an optional implementation, the second message further indicates whether to use a random access prioritization parameter in the random access procedure, and the random access prioritization parameter is used to accelerate the random access procedure.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the receiving module 1030 is further configured to receive the random access prioritization parameter.

For other functions that can be implemented by the terminal device 1000, refer to the related descriptions in the embodiment shown in FIG. 6. Details are not described again.

FIG. 11 is a schematic block diagram of a communication apparatus 1100 according to an embodiment of this application. For example, the communication apparatus 1100 is a second network device 1100.

The second network device 1100 includes a processing module 1110 and a sending module 1120, and optionally, may further include a receiving module 1130. For example, the second network device 1100 may be a network device, a chip used in the network device, or another combined device or a component that has functions of the network device. When the second network device 1100 is the network device, the sending module 1120 may be a transmitter, and the receiving module 1130 may be a receiver. The transmitter may include an antenna, a radio frequency circuit, and the like, and the receiver may also include an antenna, a radio frequency circuit, and the like. The transmitter and the receiver may belong to one functional module, for example, referred to as a transceiver; or the transmitter and the receiver may be functional modules independent of each other. The processing module 1110 may be a processor, for example, a baseband processor. The baseband processor may include one or more CPUs. When the second network device 1100 is the component having the functions of the network device, the sending module 1120 and the receiving module 1130 may be a radio frequency unit, and the processing module 1110 may be a processor, for example, a baseband processor. When the second network device 1100 is a chip system, the sending module 1120 and the receiving module 1130 may be an input/output interface of a chip (for example, a baseband chip) (where for example, the sending module 1120 is the output interface, and the receiving module 1130 is the input interface; or the input interface and the output interface are a same interface, and both the sending module 1120 and the receiving module 1130 are the interface), and the processing module 1110 may be a processor of the chip system, and may include one or more central processing units. It should be understood that in this embodiment of this application, the processing module 1110 may be implemented by a processor or a processor-related circuit component, the sending module 1120 may be implemented by a transmitter or a transmitter-related circuit component, and the receiving module 1130 may be implemented by a receiver or a receiver-related circuit component.

For example, the processing module 1110 may be configured to perform all operations, except sending and receiving operations, performed by the second network device in the embodiment shown in FIG. 7, for example, S701, and/or configured to support another process of the technology described in this specification. The sending module 1120 may be configured to perform all the sending operations, such as S702 and S703, that are performed by the second network device in the embodiment shown in FIG. 7, and/or configured to support another process of the technology described in this specification. The receiving module 1130 may be configured to perform all the receiving operations, such as S704, that are performed by the second network device in the embodiment shown in FIG. 7, and/or configured to support another process of the technology described in this specification.

In addition, for implementations of the sending module 1120 and the receiving module 1130, refer to the descriptions of the implementations of the sending module 820 and the receiving module 830.

The processing module 1110 is configured to determine to send downlink data through early downlink-data transmission.

The sending module 1120 is configured to send a second message, where the second message indicates whether to use a random access prioritization parameter during the early downlink-data transmission, and the random access prioritization parameter is used to accelerate a random access procedure.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the sending module 1120 is further configured to send the random access prioritization parameter.

For other functions that can be implemented by the second network device 1100, refer to the related descriptions in the embodiment shown in FIG. 7. Details are not described again.

FIG. 12 is a schematic block diagram of a communication apparatus 1200 according to an embodiment of this application. For example, the communication apparatus 1200 is a terminal device 1200.

The terminal device 1200 includes a processing module 1210 and a receiving module 1230. Optionally, the terminal device 1200 may further include a sending module 1220. For example, the terminal device 1200 may be a terminal device, a chip used in the terminal device, or another combined device or a component that has functions of the terminal device. When the terminal device 1200 is the terminal device, the sending module 1220 may be a transmitter, and the receiving module 1230 may be a receiver. The transmitter may include an antenna, a radio frequency circuit, and the like, and the receiver may also include an antenna, a radio frequency circuit, and the like. The transmitter and the receiver may belong to one functional module, for example, referred to as a transceiver; or the transmitter and the receiver may be functional modules independent of each other. The processing module 1210 may be a processor, for example, a baseband processor. The baseband processor may include one or more CPUs. When the terminal device 1200 is the component having the functions of the terminal device, the sending module 1220 and the receiving module 1230 may be a radio frequency unit, and the processing module 1210 may be a processor, for example, a baseband processor. When the terminal device 1200 is a chip system, the sending module 1220 and the receiving module 1230 may be an input/output interface of a chip (for example, a baseband chip) (where for example, the sending module 1220 is the output interface, and the receiving module 1230 is the input interface; or the input interface and the output interface are a same interface, and both the sending module 1220 and the receiving module 1230 are the interface), and the processing module 1210 may be a processor of the chip system, and may include one or more central processing units. It should be understood that in this embodiment of this application, the processing module 1210 may be implemented by a processor or a processor-related circuit component, the sending module 1220 may be implemented by a transmitter or a transmitter-related circuit component, and the receiving module 1230 may be implemented by a receiver or a receiver-related circuit component.

For example, the processing module 1210 may be configured to perform all operations, except sending and receiving operations, performed by the terminal device in the embodiment shown in FIG. 7, for example, the operation of determining, based on a second message, to use a random access prioritization parameter, and/or configured to support another process of the technology described in this specification. The sending module 1220 may be configured to perform all the sending operations, such as S704, that are performed by the terminal device in the embodiment shown in FIG. 7, and/or configured to support another process of the technology described in this specification. The receiving module 1230 may be configured to perform all the receiving operations, such as S702 and S703, that are performed by the terminal device in the embodiment shown in FIG. 7, and/or configured to support another process of the technology described in this specification.

In addition, for implementations of the sending module 1220 and the receiving module 1230, refer to the descriptions of the implementations of the sending module 820 and the receiving module 830.

The receiving module 1230 is configured to receive the second message, where the second message indicates whether to use the random access prioritization parameter during early downlink-data transmission, and the random access prioritization parameter is used to accelerate a random access procedure.

The processing module 1210 is configured to perform the random access procedure to perform early downlink-data transmission, where the random access prioritization parameter is used in the random access procedure.

In an optional implementation, the random access prioritization parameter includes a ramping step and/or a scaling factor, the ramping step is used to determine transmit power for a next random access request message when a random access response message fails to be received, and the scaling factor is used to determine backoff duration that lasts before a next random access procedure is initiated.

In an optional implementation, the receiving module 1230 is further configured to receive the random access prioritization parameter.

In an optional implementation,
the receiving module 1230 is further configured to receive a reference signal;
the processing module 1210 is further configured to measure the reference signal to obtain a measurement result; and
the processing module 1210 is further configured to: when a value corresponding to the measurement result is greater than a second threshold, select a 2-step RACH; otherwise, select a 4-step RACH.

For other functions that can be implemented by the terminal device 1200, refer to the related descriptions in the embodiment shown in FIG. 7. Details are not described again.

An embodiment of this application further provides a communication apparatus, and the communication apparatus may be a terminal device or a circuit. The communication apparatus may be configured to perform actions performed by the terminal device in the foregoing method embodiments.

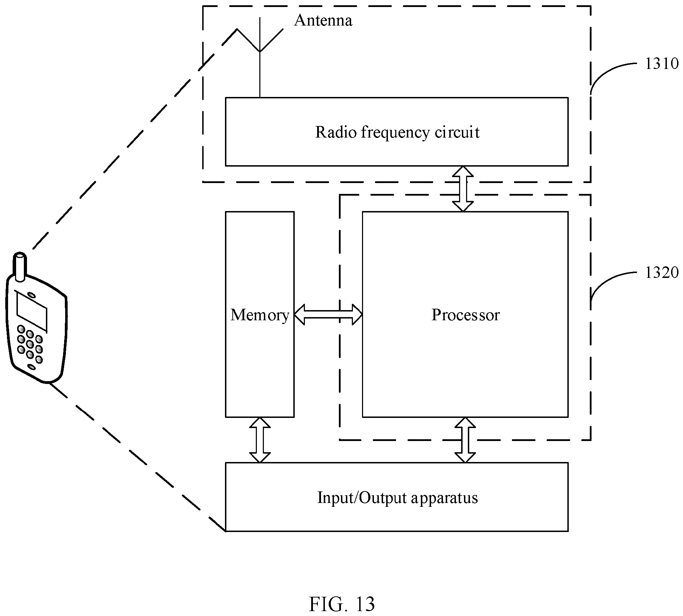

When the communication apparatus is the terminal device, FIG. 13 is a simplified schematic diagram of a structure of the terminal device. For ease of understanding and illustration, FIG. 13 uses an example in which the terminal device is a mobile phone. As shown in FIG. 13, the terminal device includes a processor, a memory, a radio frequency circuit, an antenna, and an input/output apparatus. The processor is mainly configured to: process a communication protocol and communication data, control the terminal device, execute a software program, process data of the software program, and so on. The memory is mainly configured to store the software program and the data. The radio frequency circuit is mainly configured to perform conversion between a baseband signal and a radio frequency signal, and process the radio frequency signal. The antenna is mainly configured to send and receive the radio frequency signal in an electromagnetic wave form. The input/output apparatus, for example, a touchscreen, a display, or a keyboard, is mainly configured to: receive data entered by a user, and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in the electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 13. An actual terminal device product may include one or more processors and one or more memories. The memory may also be referred to as a storage medium, a storage device, or the like. The memory may be independent of the processor, or may be integrated with the processor. This is not limited in this embodiment of this application.

In this embodiment of this application, the antenna and the radio frequency circuit that have sending and receiving functions may be considered as a transceiver unit of the terminal device (where the transceiver unit may be one functional unit, and the functional unit can implement the sending and receiving functions; or the transceiver unit may include two functional units, namely, a receiving unit that can implement the receiving function and a sending unit that can implement the sending function), and the processor that has a processing function is considered as a processing unit of the terminal device. As shown in FIG. 13, the terminal device includes a transceiver unit 1310 and a processing unit 1320. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1310 and that is configured to implement the receiving function may be considered as a receiving unit, and a component that is in the transceiver unit 1310 and that is configured to implement the sending function may be considered as a sending unit. In other words, the transceiver unit 1310 includes the receiving unit and the sending unit. The transceiver unit may also be sometimes referred to as a transceiver, a transceiver circuit, or the like. The receiving unit may also be sometimes referred to as a receiver, a receiver circuit, or the like. The sending unit may also be sometimes referred to as a transmitter, a transmitter circuit, or the like.

It should be understood that the transceiver unit 1310 is configured to perform a sending operation and a receiving operation on a terminal device side in the foregoing method embodiments, and the processing unit 1320 is configured to perform an operation other than the receiving operation and the sending operation of the terminal device in the foregoing method embodiments.

For example, in an implementation, the processing unit 1320 may be configured to perform all operations, except sending and receiving operations, performed by the terminal device in the embodiment shown in FIG. 6, for example, the operation of determining a first random access type based on a second message, and/or configured to support another process of the technology described in this specification. The transceiver unit 1310 may be configured to perform all the sending and receiving operations, such as S604, S605, S610, and S612, that are performed by the terminal device in the embodiment shown in FIG. 6, and/or configured to support another process of the technology described in this specification.

For another example, in an implementation, the processing unit 1320 may be configured to perform all operations, except sending and receiving operations, performed by the terminal device in the embodiment shown in FIG. 7, for example, the operation of determining, based on a second message, to use a random access prioritization parameter, and/or configured to support another process of the technology described in this specification. The transceiver unit 1310 may be configured to perform all the sending and receiving operations, such as S702 to S704, that are performed by the terminal device in the embodiment shown in FIG. 7, and/or configured to support another process of the technology described in this specification.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

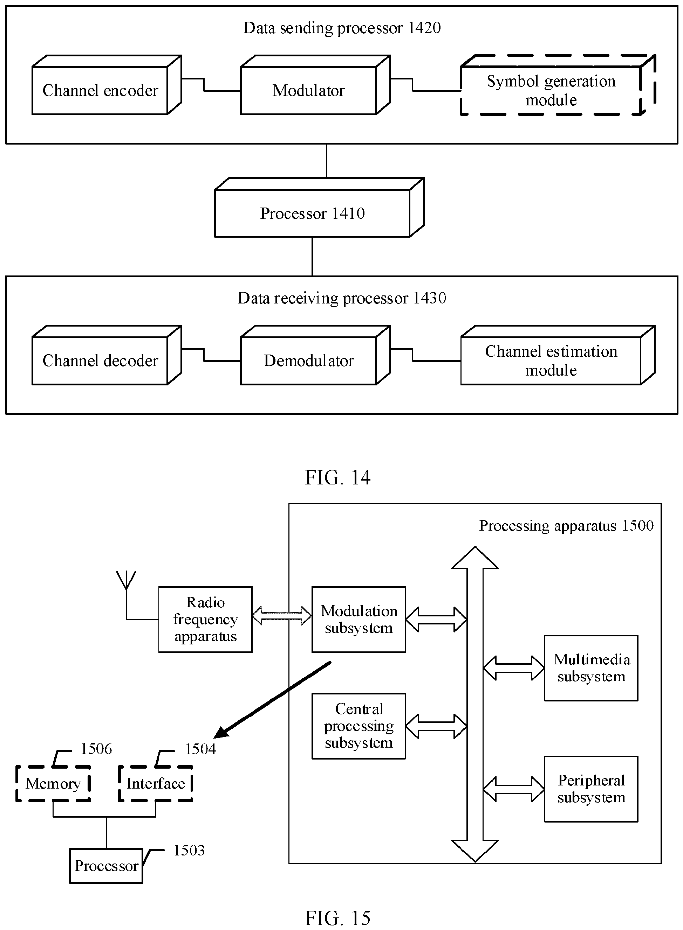

When the communication apparatus in this embodiment is the terminal device, refer to a device shown in FIG. 14. In an example, the device can implement a function similar to the function of the processing module 1010 in FIG. 10. In another example, the device can implement a function similar to the function of the processing module 1210 in FIG. 12. In FIG. 14, the device includes a processor 1410, a data sending processor 1420, and a data receiving processor 1430. The processing module 1010 in the foregoing embodiment may be the processor 1410 in FIG. 14, and completes a corresponding function. The sending module 1020 in the foregoing embodiment may be the data sending processor 1420 in FIG. 14, and completes a corresponding function. The receiving module 1030 in the foregoing embodiment may be the data receiving processor 1430 in FIG. 14, and completes a corresponding function. Alternatively, the processing module 1210 in the foregoing embodiment may be the processor 1410 in FIG. 14, and completes a corresponding function. The sending module 1220 in the foregoing embodiment may be the data sending processor 1420 in FIG. 14, and completes a corresponding function. The receiving module 1230 in the foregoing embodiment may be the data receiving processor 1430 in FIG. 14, and completes a corresponding function. Although FIG. 14 shows a channel encoder and a channel decoder, it may be understood that the modules do not constitute a limitation on this embodiment, and are merely examples.

FIG. 15 shows another form of this embodiment. A processing apparatus 1500 includes modules such as a modulation subsystem, a central processing subsystem, and a peripheral subsystem. The communication apparatus in this embodiment may be used as the modulation subsystem. Specifically, the modulation subsystem may include a processor 1503 and an interface 1504. The processor 1503 implements a function of the processing module 1010, and the interface 1504 implements functions of the sending module 1020 and the receiving module 1030. Alternatively, the processor 1503 implements a function of the processing module 1210, and the interface 1504 implements functions of the sending module 1220 and the receiving module 1230. In another variant, the modulation subsystem includes a memory 1506, a processor 1503, and a program that is stored in the memory 1506 and that can be run on the processor. When executing the program, the processor 1503 implements the method on a terminal device side in the foregoing method embodiments. It should be noted that the memory 1506 may be nonvolatile or volatile. The memory 1506 may be located in the modulation subsystem, or may be located in the processing apparatus 1500, provided that the memory 1506 can be connected to the processor 1503.

When the apparatus in this embodiment of this application is a network device, the apparatus may be that shown in FIG. 16. The apparatus 1600 includes one or more radio frequency units, such as a remote radio unit (remote radio unit, RRU) 1610 and one or more baseband units (baseband units, BBUs) (which may also be referred to as a digital unit (digital unit, DU)) 1620. The RRU 1610 may be referred to as a transceiver module. The transceiver module may include a sending module and a receiving module, or the transceiver module may be a module that can implement sending and receiving functions. The transceiver module may correspond to the sending module 820 and the receiving module 830 in FIG. 8. Alternatively, the transceiver module may correspond to the sending module 920 and the receiving module 930 in FIG. 9. Alternatively, the transceiver module may correspond to the sending module 1120 and the receiving module 1130 in FIG. 11. Optionally, the transceiver module may also be referred to as a transceiver, a transceiver circuit, or the like, and may include at least one antenna 1611 and a radio frequency unit 1612. The RRU 1610 is mainly configured to: send and receive a radio frequency signal, and perform conversion between the radio frequency signal and a baseband signal. For example, the RRU 1610 is configured to send indication information to a terminal device. The BBU 1620 is mainly configured to: perform baseband processing, control a base station, and so on. The RRU 1610 and the BBU 1620 may be physically disposed together, or may be physically separate, that is, in a distributed base station.

The BBU 1620 is a control center of the base station, and may also be referred to as a processing module. The BBU 1620 may correspond to the processing module 810 in FIG. 8, the processing module 910 in FIG. 9, or the processing module 1110 in FIG. 11, and is mainly configured to implement baseband processing functions such as channel coding, multiplexing, modulation, and spreading. For example, the BBU (the processing module) may be configured to control the base station to perform an operation procedure related to the network device in the foregoing method embodiments, for example, generate the foregoing indication information.

In an example, the BBU 1620 may include one or more boards, and a plurality of boards may jointly support a radio access network (for example, an LTE network) in a single access standard, or may separately support radio access networks (for example, an LTE network, a 5G network, or another network) in different access standards. The BBU 1620 further includes a memory 1621 and a processor 1622. The memory 1621 is configured to store necessary instructions and data. The processor 1622 is configured to control the base station to perform a necessary action, for example, configured to control the base station to perform the operation procedure related to the network device in the foregoing method embodiments. The memory 1621 and the processor 1622 may serve the one or more boards. In other words, the memory and the processor may be disposed on each board. Alternatively, a plurality of boards may share a same memory and a same processor. In addition, a necessary circuit may be further disposed on each board. An embodiment of this application provides a first communication system. The first communication system may include the second network device in the embodiment shown in FIG. 6, the first network device in the embodiment shown in FIG. 6, and the terminal device in the embodiment shown in FIG. 6. The second network device is, for example, the second network device 800 in FIG. 8. The first network device is, for example, the first network device 900 in FIG. 9. The terminal device is, for example, the terminal device 1000 in FIG. 10.

An embodiment of this application provides a second communication system. The second communication system may include the second network device in the embodiment shown in FIG. 7 and the terminal device in the embodiment shown in FIG. 7. The second network device is, for example, the second network device 1100 in FIG. 11. The terminal device is, for example, the terminal device 1200 in FIG. 12.

An embodiment of this application further provides a computer-readable storage medium. The computer-readable storage medium stores a computer program. When the computer program is executed by a computer, the computer may implement a procedure related to the first network device in the embodiment shown in FIG. 6 in the foregoing method embodiments.

An embodiment of this application further provides a computer-readable storage medium. The computer-readable storage medium stores a computer program. When the computer program is executed by a computer, the computer may implement a procedure related to the second network device in the embodiment shown in FIG. 6 in the foregoing method embodiments.

An embodiment of this application further provides a computer-readable storage medium. The computer-readable storage medium is configured to store a computer program. When the computer program is executed by a computer, the computer may implement a procedure related to the terminal device in the embodiment shown in FIG. 6 in the foregoing method embodiments.

An embodiment of this application further provides a computer-readable storage medium. The computer-readable storage medium stores a computer program. When the computer program is executed by a computer, the computer may implement a procedure related to the second network device in the embodiment shown in FIG. 7 in the foregoing method embodiments.

An embodiment of this application further provides a computer-readable storage medium. The computer-readable storage medium is configured to store a computer program. When the computer program is executed by a computer, the computer may implement a procedure related to the terminal device in the embodiment shown in FIG. 7 in the foregoing method embodiments.

An embodiment of this application further provides a computer program product. The computer program product is configured to store a computer program. When the computer program is executed by a computer, the computer may implement a procedure related to the first network device in the embodiment shown in FIG. 6 in the foregoing method embodiments.

An embodiment of this application further provides a computer program product. The computer program product is configured to store a computer program. When the computer program is executed by a computer, the computer may implement a procedure related to the second network device in the embodiment shown in FIG. 6 in the foregoing method embodiments.

An embodiment of this application further provides a computer program product. The computer program product is configured to store a computer program. When the computer program is executed by a computer, the computer may implement a procedure related to the terminal device in the embodiment shown in FIG. 6 in the foregoing method embodiments.

An embodiment of this application further provides a computer program product. The computer program product is configured to store a computer program. When the computer program is executed by a computer, the computer may implement a procedure related to the second network device in the embodiment shown in FIG. 7 in the foregoing method embodiments.

An embodiment of this application further provides a computer program product. The computer program product is configured to store a computer program. When the computer program is executed by a computer, the computer may implement a procedure related to the terminal device in the embodiment shown in FIG. 7 in the foregoing method embodiments.

It should be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing computer-readable storage medium may be any usable medium accessible by the computer. The following is taken as an example but is not limited: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can be used to carry or store expected program code in a form of an instruction or a data structure and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
receiving a first message from a first network device, wherein the first message comprises random access related information; and
sending a second message to a terminal device, wherein the second message indicates to use a first random access type in a random access procedure, and the first random access type is a 2-step random access channel RACH or a 4-step RACH, wherein
the random access related information comprises one or more of the following:
random access indication information, indicating the first random access type;
random access capability information, comprising information about a random access type supported by the terminal device;
random access mode information, indicating to use a contention-based random access CBRA mode or a contention-free random access CFRA mode in the random access procedure;
an early downlink-data transmission indication, indicating to transmit a downlink data packet in the random access procedure; and
a size of the downlink data packet.

2. The method according to claim 1, wherein the random access related information comprises the random access capability information, and does not comprise the random access indication information; and the method further comprises:
determining the first random access type based on the random access capability information, wherein
if the terminal device supports the 2-step RACH, the first random access type is the 2-step RACH or the 4-step RACH; or if the terminal device does not support the 2-step RACH, the first random access type is the 4-step RACH.

3. The method according to claim 1 or 2, wherein the second message further comprises the early downlink-data transmission indication and/or the random access mode information.

4. The method according to any one of claims 1 to 3, wherein
the second message further indicates whether to use a random access prioritization parameter in the random access procedure, and the random access prioritization parameter is used to accelerate the random access procedure.

5. The method according to claim 4, wherein the random access prioritization parameter comprises a ramping step and/or a scaling factor, the ramping step is used to determine transmit power for a next random access request message when a random access response message fails to be received, and the scaling factor is used to determine backoff duration that lasts before a next random access procedure is initiated.

6. The method according to claim 4 or 5, wherein the method further comprises:
sending the random access prioritization parameter to the terminal device.

7. The method according to any one of claims 1 to 6, wherein
the first message is a radio access network paging message; and/or
the second message is a paging message.

8. A communication method, comprising:
determining random access related information; and
sending a first message to a second network device, wherein the first message comprises the random access related information, wherein
the random access related information comprises one or more of the following:
random access indication information, indicating an access type in a random access procedure;
random access capability information, comprising information about a random access type supported by a terminal device;
random access mode information, indicating to use a CBRA mode or a CFRA mode in the random access procedure;
an early downlink-data transmission indication, indicating to transmit a downlink data packet in the random access procedure; and
a size of the downlink data packet.

9. The method according to claim 8, wherein the method further comprises:
determining that the size of the downlink data packet is less than a first threshold; and
determining to transmit the downlink data packet in the random access procedure.

10. The method according to claim 8 or 9, wherein
the first message is a radio access network paging message.

11. A communication method, comprising:
receiving a second message from a second network device, wherein the second message indicates to use a first random access type in a random access procedure, and the first random access type is a 2-step RACH or a 4-step RACH; and
initiating random access by using the first random access type, wherein the second message is a paging message.

12. The method according to claim 11, wherein the second message further comprises an early downlink-data transmission indication and/or random access mode information, wherein the early downlink-data transmission indication indicates to transmit a downlink data packet in the random access procedure, and the random access mode information indicates to use a CBRA mode or a CFRA mode in the random access procedure.

13. The method according to claim 11 or 12, wherein the method further comprises:
performing early downlink-data transmission in the random access procedure.

14. The method according to any one of claims 11 to 13, wherein
the second message further indicates whether to use a random access prioritization parameter in the random access procedure, and the random access prioritization parameter is used to accelerate the random access procedure.

15. The method according to claim 14, wherein the random access prioritization parameter comprises a ramping step and/or a scaling factor, the ramping step is used to determine transmit power for a next random access request message when a random access response message fails to be received, and the scaling factor is used to determine backoff duration that lasts before a next random access procedure is initiated.

16. The method according to claim 14 or 15, wherein the method further comprises:
receiving the random access prioritization parameter.

17. A communication apparatus, comprising:
a receiving module, configured to receive a first message from a first network device, wherein the first message comprises random access related information; and
a sending module, configured to send a second message to a terminal device, wherein the second message indicates to use a first random access type in a random access procedure, and the first random access type is a 2-step RACH or a 4-step RACH, wherein
the random access related information comprises one or more of the following:
random access indication information, indicating the first random access type;
random access capability information, comprising information about a random access type supported by the terminal device;
random access mode information, indicating to use a CBRA mode or a CFRA mode in the random access procedure;
an early downlink-data transmission indication, indicating to transmit a downlink data packet in the random access procedure; and
a size of the downlink data packet.

18. The communication apparatus according to claim 17, wherein the communication apparatus further comprises a processing module; the random access related information comprises the random access capability information, and does not comprise the random access indication information; and the processing module is configured to determine the first random access type based on the random access capability information, wherein
if the terminal device supports the 2-step RACH, the first random access type is the 2-step RACH or the 4-step RACH; or if the terminal device does not support the 2-step RACH, the first random access type is the 4-step RACH.

19. The communication apparatus according to claim 17 or 18, wherein the second message further comprises the early downlink-data transmission indication and/or the random access mode information.

20. The communication apparatus according to any one of claims 17 to 19, wherein
the second message further indicates whether to use a random access prioritization parameter in the random access procedure, and the random access prioritization parameter is used to accelerate the random access procedure.

21. The communication apparatus according to claim 20, wherein the random access prioritization parameter comprises a ramping step and/or a scaling factor, the ramping step is used to determine transmit power for a next random access request message when a random access response message fails to be received, and the scaling factor is used to determine backoff duration that lasts before a next random access procedure is initiated.

22. The communication apparatus according to claim 20 or 21, wherein the sending module is further configured to send the random access prioritization parameter to the terminal device.

23. The communication apparatus according to any one of claims 17 to 22, wherein
the first message is a radio access network paging message; and/or
the second message is a paging message.

24. A communication apparatus, comprising:
a processing module, configured to determine random access related information; and
a sending module, configured to send a first message to a second network device, wherein the first message comprises the random access related information, wherein
the random access related information comprises one or more of the following:
random access indication information, indicating an access type in a random access procedure;
random access capability information, comprising information about a random access type supported by a terminal device;
random access mode information, indicating to use a CBRA mode or a CFRA mode in the random access procedure;
an early downlink-data transmission indication, indicating to transmit a downlink data packet in the random access procedure; and
a size of the downlink data packet.

25. The communication apparatus according to claim 24, wherein the processing module is further configured to:
determine that the size of the downlink data packet is less than a first threshold; and
determine to transmit the downlink data packet in the random access procedure.

26. The communication apparatus according to claim 24 or 25, wherein
the first message is a radio access network paging message.

27. A communication apparatus, comprising:
a receiving module, configured to receive a second message from a second network device, wherein the second message indicates to use a first random access type in a random access procedure, and the first random access type is a 2-step RACH or a 4-step RACH; and
a processing module, configured to initiate random access by using the first random access type, wherein the second message is a paging message.

28. The communication apparatus according to claim 27, wherein the second message further comprises an early downlink-data transmission indication and/or random access mode information, wherein the early downlink-data transmission indication indicates to transmit a downlink data packet in the random access procedure, and the random access mode information indicates to use a CBRA mode or a CFRA mode in the random access procedure.

29. The communication apparatus according to claim 27 or 28, wherein the processing module is further configured to perform early downlink-data transmission in the random access procedure.

30. The communication apparatus according to any one of claims 27 to 29, wherein
the second message further indicates whether to use a random access prioritization parameter in the random access procedure, and the random access prioritization parameter is used to accelerate the random access procedure.

31. The communication apparatus according to claim 30, wherein the random access prioritization parameter comprises a ramping step and/or a scaling factor, the ramping step is used to determine transmit power for a next random access request message when a random access response message fails to be received, and the scaling factor is used to determine backoff duration that lasts before a next random access procedure is initiated.

32. The communication apparatus according to claim 30 or 31, wherein the receiving module is further configured to receive the random access prioritization parameter.

33. A computer-readable storage medium, wherein the computer-readable storage medium is configured to store a computer program; and when the computer program is run on a computer, the computer is enabled to perform the method according to any one of claims 1 to 7, the method according to any one of claims 8 to 10, or the method according to any one of claims 11 to 16.

34. A chip, comprising a processor and a communication interface, wherein the processor is configured to read instructions to perform the method according to any one of claims 1 to 7, the method according to any one of claims 8 to 10, or the method according to any one of claims 11 to 16.
